# EUROPEAN PATENT APPLICATION

(11) **EP 1 898 550 A1**
(43) Date of publication of application: **12.03.2008**
(21) Application number: 06767764.1
(22) Date of filing: 27.06.2006
(51) Int. Cl.: H04L 9/06

(54) **ENCRYPTION DEVICE, ENCRYPTION METHOD, DECRYPTION DEVICE, DECRYPTION METHOD, AND DATA STRUCTURE**

(30) Priority: 29.06.2005 JP 2005190803
(71) Applicant: N-Crypt, Inc., Yokkaichi-shi, Mie 512-8044 (JP)
(72) Inventor: NAKAMURA, Takatoshi, Yokkaichi-shi, Mie 512-8044 (JP)
(74) Representative: Skone James, Robert Edmund
(86) International application number: PCT/JP2006/313186
(87) International publication number: WO 2007/001075

(57) **Abstract**

To allow encryption by setting conditions of decryption variously. Encrypted data obtained by encrypting subject data has header data 501, basic condition data 502, encrypted condition data 503 and encrypted cut data 504. The basic condition data 502 includes data on a condition for allowing or prohibiting decryption of the encrypted condition data 503. A decryption processing apparatus decrypts only the encrypted condition data of which decryption is allowed by the basic condition data 502 so as to render it as condition data. The condition data includes data on a condition for allowing or prohibiting decryption of the encrypted cut data. The decryption processing apparatus decrypts only the encrypted cut data 504 of which decryption is allowed by the encrypted condition data 503.

## Description

### Technical Field

The present invention relates to an encryption technique for encrypting subject data in plain text to render it as encrypted data and a decryption technique for decrypting the encrypted data.

### Background of the Invention

Nowadays, security relating to information is becoming increasingly important, and various researches are underway as to an encryption technique for encrypting data of which contents should desirably be unknown to an unauthorized third party (called "subject data" in this specification) to render it as encrypted data.

The encrypted data is most often delivered to a third party even though there are the cases where it is decrypted by an encryption processing apparatus doubling as a decryption processing apparatus having encrypted the encrypted data. The third party decrypts the received encrypted data and restores it to original subject data by using predetermined key and algorithm so as to use the subject data as appropriate.

In the case of delivering the same encrypted data to a number of persons for instance, it is convenient if it is possible to allow each of the persons to decrypt a different portion of the encrypted data.

It is also convenient if it is possible to allow decryption of certain encrypted data under a specific condition, such as limited time. In view of increased personal information protection in recent years for instance, it is not so desirable, even in the case of the encrypted data which is encrypted, to continue to exist somewhere in a state capable of encryption indefinitely. In the case of allowing decryption of the encrypted data under the condition of limited time as described above, it is very convenient if it is possible to divide the time into multiple periods and put detailed restrictions, such as allowing decryption of a certain portion of the encrypted data in a certain period and allowing decryption of a different portion of the encrypted data in another period.

However, there is no encryption technique for allowing the above by setting the conditions of decryption variously.

An object of the present invention is to provide an encryption technique for setting the conditions of decryption of the encrypted data generated by encrypting the subject data variously, a data structure of the encrypted data encrypted by the encryption technique and a decryption technique of the encrypted data.

### Disclosure of the Invention

To achieve the object, the inventors hereof propose the invention described below.

The present invention is an encryption processing apparatus comprising: cutting means for cutting subject data in plain text by a predetermined number of bits into multiple pieces of plain text cut data; encrypting means for encrypting multiple pieces of the plain text cut data with a predetermined key and a predetermined algorithm to render it as multiple pieces of encrypted cut data; condition data generating means for generating condition data including data on at least one of a condition in the case of allowing decryption of each individual piece of the encrypted cut data and a condition in the case of prohibiting decryption of each individual piece of the encrypted cut data; condition data encrypting means for encrypting the condition data with a predetermined key and a predetermined algorithm to render it as encrypted condition data; basic condition data generating means for generating basic condition data including data on at least one of a condition in the case of allowing decryption of the encrypted condition data and a condition in the case of prohibiting decryption of the encrypted condition data; and connecting means for connecting the multiple pieces of encrypted cut data, the encrypted condition data and the basic condition data as one to render them as a series of encrypted data premised to be decrypted by a predetermined decryption processing apparatus.

And the connecting means connects the encrypted cut data, the encrypted condition data and the basic condition data as one to render them as a series of encrypted data in a manner the encrypted condition data is positioned ahead of the encrypted cut data having its decryption allowed or prohibited according to the condition included in the condition data which is a source of the encrypted condition data and also the basic condition data is positioned ahead of the encrypted condition data.

This encryption processing apparatus is based on a general encryption processing apparatus for encrypting each of multiple pieces of the plain text cut data generated by cutting the subject data and thereby generating multiple pieces of encrypted cut data to connect them as one and render them as the encrypted data. The encryption processing apparatus comprises the condition data generating means for generating the condition data including data on at least one of the condition in the case of allowing decryption of each individual piece of the encrypted cut data and the condition in the case of prohibiting the decryption of each individual piece of the encrypted cut data, where the condition data is also encrypted and rendered as the encrypted condition data to be added to a part of the encrypted data. Therefore, as for the encrypted data generated by the encryption processing apparatus, it is possible, by means of the above-mentioned condition data, to set a condition for decrypting at least a part of the encrypted data (at least a part of multiple pieces of the encrypted cut data) under a different condition from the other parts. Thus, the encryption processing apparatus can set the condition for decrypting the encrypted data generated by encrypting the subject data variously.

As described above, the encryption processing apparatus also encrypts the condition data to render it as the encrypted condition data. Therefore, it is not possible for anyone other than a predetermined person to know what condition each individual piece of the encrypted cut data can be decrypted under. Thus, security is high as to the encrypted data created by the encryption processing apparatus.

The encryption processing apparatus comprises the basic condition data generating means for generating the basic condition data including the data on at least one of the condition in the case of allowing decryption of the encrypted condition data and the condition in the case of prohibiting the decryption of the encrypted condition data, where the basic condition data generated by the basic condition data generating means is included in the encrypted data. A person decrypting the encrypted data can decrypt the above-mentioned encrypted condition data by means of the basic condition data.

The encryption processing apparatus connects the encrypted cut data, the encrypted condition data and the basic condition data as one to render them as a series of encrypted data in a manner the encrypted condition data is positioned ahead of the encrypted cut data having its decryption allowed or prohibited according to the condition included in the condition data which is a source of the encrypted condition data and also the basic condition data is positioned ahead of the encrypted condition data. The encrypted condition data is positioned ahead of the encrypted cut data having its decryption allowed or prohibited according to the condition included in the condition data which is a source of the encrypted condition data. This is because, while the encrypted data is read from the head when the encrypted data is decrypted by the decryption processing apparatus, it is necessary to read in advance the encrypted condition data for generating the condition data required on decrypting the encrypted data. For the same reason, the basic condition data is positioned ahead of the encrypted condition data.

It is also possible to obtain the same effects that the encryption processing apparatus has by the following method for instance.

It is an encryption method implemented by an encryption processing apparatus, wherein the encryption processing apparatus implements steps of: cutting subject data in plain text by a predetermined number of bits into multiple pieces of plain text cut data; encrypting the multiple pieces of the plain text cut data with a predetermined key and a predetermined algorithm to render it as multiple pieces of encrypted cut data; generating condition data including data on at least one of a condition in the case of allowing decryption of each individual piece of the encrypted cut data and a condition in the case of prohibiting decryption of each individual piece of the encrypted cut data; encrypting the condition data with a predetermined key and a predetermined algorithm to render it as encrypted condition data; generating basic condition data including data on at least one of a condition in the case of allowing decryption of the encrypted condition data and a condition in the case of prohibiting decryption of the encrypted condition data; and connecting the multiple pieces of the encrypted cut data, the encrypted condition data and the basic condition data as one to render them as a series of encrypted data premised to be decrypted by a predetermined decryption processing apparatus, and wherein: in the step of connecting the multiple pieces of encrypted cut data, the encrypted condition data and the basic condition data as one to render them as a series of encrypted data premised to be decrypted by the predetermined decryption processing apparatus, the encryption processing apparatus connects the encrypted cut data, the encrypted condition data and the basic condition data as one to render them as a series of encrypted data in a manner the encrypted condition data is positioned ahead of the encrypted cut data having its decryption allowed or prohibited according to the condition included in the condition data which is a source of the encrypted condition data and also the basic condition data is positioned ahead of the encrypted condition data.

The condition data generating means may generate either only one piece or multiple pieces of the condition data. There is one piece of the encrypted condition data in the former case, and there are multiple pieces of the encrypted condition data in the latter case.

The condition data generating means may generate multiple pieces of the condition data to satisfy the following conditions (1) to (3) for instance:
(1) each of multiple pieces of the condition data is associated with at least one of the pieces of the encrypted cut data and includes the data on at least one of the condition in the case of allowing the decryption of the associated encrypted cut data and the condition in the case of prohibiting the decryption of the associated encrypted cut data;
(2) as for the multiple pieces of the condition data, every piece of the encrypted cut data is associated with one of the multiple pieces of the condition data; and
(3) no one piece of the encrypted cut data is associated with multiple pieces of the condition data.
   In this case, the basic condition data generating means generates the basic condition data including the data on at least one of the condition as to which of the multiple pieces of the encrypted condition data should have its decryption allowed and the condition as to which of the multiple pieces of the encrypted condition data should have its decryption prohibited.
   Thus, it is possible to make settings in detail as to the decryption of the encrypted condition data which is the source of the condition data as a prerequisite for which piece of the encrypted cut data should have its decryption allowed.
   In this case, each individual piece of the encrypted condition data is positioned ahead of the encrypted cut data created by encrypting the plain text cut data associated with the condition data which is the source of each individual piece of the encrypted condition data. There may be the cases where the encrypted condition data is positioned behind the encrypted cut data.
   As described above, there are the cases where the condition data generating means generates multiple pieces of the condition data. In this case, the condition data generating means may include in at least one of the pieces of the condition data the data on the condition in the case of allowing the decryption of the encrypted condition data generated by encrypting the other condition data.
   In the case where the condition data generating means generates such condition data, the condition data generated by decrypting a certain piece of the encrypted condition data may be a prerequisite for decrypting a next piece of the encrypted condition data (the next piece of the encrypted condition data is not always one piece).
   To be more specific, even if the data on the condition in the case of allowing the decryption of the next piece of the encrypted condition data is successfully taken from the condition data obtained by decrypting a certain piece of the encrypted condition data, the next piece of the encrypted condition data cannot be decrypted when the condition in the case of allowing the decryption of the next piece of the encrypted condition data is not satisfied. When decrypting a certain piece of the encrypted condition data, the encrypted condition data will not be decrypted in the case where an immediately preceding piece of the encrypted condition data to be decrypted is not decrypted.
   The condition data generating means generates multiple pieces of the condition data and has at least several pieces of the multiple pieces of the condition data associated to decrypt the encrypted condition data generated by encrypting those several pieces of the condition data in predetermined order; and those several pieces of the condition data may be generated to include data on a condition for decrypting the encrypted condition data to be decrypted following the encrypted condition data generated by encrypting the condition data.
   In this case, the condition data generated by decrypting a certain piece of the encrypted condition data may be a prerequisite for decrypting the next piece of the encrypted condition data (the next piece of the encrypted condition data is one piece). In this case, the pieces of the encrypted condition data are decrypted one after another in predetermined order as long as the condition for decrypting the encrypted condition data to be decrypted next is satisfied.
   The basic condition data generating means may include a condition in the case of allowing decryption of a piece to be decrypted first out of the pieces of the encrypted condition data generated by encrypting several pieces of the condition data. It is thereby possible to decrypt a series of the pieces of the encrypted condition data associated to be decrypted in predetermined order starting from the first one in sequence.
   The condition for allowing or prohibiting the decryption of the encrypted cut data identified by the condition data is not limited in particular if as described above. The condition data includes the data on at least one of the following (4) to (7):
(4) information for identifying the decryption processing apparatus allowed to perform or prohibited from performing the decryption of at least one piece of the encrypted cut data;
(5) information for identifying a user allowed to perform or prohibited from performing the decryption of at least one piece of the encrypted cut data;
(6) at least one of information on a period allowing the decryption of at least one piece of the encrypted cut data and information on a period prohibiting the decryption of at least one piece of the encrypted cut data; and
(7) information on which of the multiple pieces of the encrypted cut data should have its decryption allowed or information on which of the multiple pieces of the encrypted cut data should have its decryption prohibited.

The encryption processing apparatus may comprise encryption key holding means holding multiple encryption keys which are the keys used when the encrypting means encrypts the plain text cut data.

And the encrypting means uses at least two of the multiple encryption keys held by the encryption key holding means and thereby renders multiple pieces of the plain text cut data as the encrypted cut data so as to encrypt at least one of them with an encryption key different from that of the other pieces of the plain text cut data, and the condition data generating means generates the condition data including the data on which of the encryption keys held by the encryption key holding means is used to render each individual piece of the encrypted cut data as the encrypted cut data.

The encryption processing apparatus uses the multiple encryption keys to render the plain text cut data as the encrypted cut data, and includes in the condition data the data for identifying the encryption key for encrypting the encrypted cut data so that a person decrypting the encrypted data can perform the decryption. The decryption processing apparatus for decrypting the encrypted data generated by the encryption processing apparatus needs to include the same key holding means as that of the encryption processing apparatus.

The encryption processing apparatus can improve the security of the encrypted data by using the multiple encryption keys to encrypt the plain text cut data.

According to the above-mentioned invention, the multiple encryption keys are held by the encryption key holding means in advance so that the multiple keys can be used when encrypting the plain text cut data.

It is also possible to generate multiple encryption keys in sequence so as to use the multiple keys when encrypting the plain text cut data.

Such an encryption processing apparatus comprises encryption key generating means for generating encryption keys which are the keys used when the encrypting means encrypts the plain text cut data in predetermined timing for instance. And the encrypting means uses multiple encryption keys generated by the encryption key generating means and thereby renders multiple pieces of the plain text cut data as the encrypted cut data so as to encrypt at least one of them with an encryption key different from that of the other pieces of the plain text cut data, and the condition data generating means generates the condition data including the data for identifying the encryption key used when each individual piece of the encrypted cut data is encrypted.

Such an encryption processing apparatus does not hold the encryption keys to be used to encrypt the plain text cut data but generates them successively instead so as not to have the encryption keys stolen. Therefore, the security is high as to the encrypted data encrypted by such an encryption processing apparatus.

The encryption key generating means may generate the encryption keys so that the encryption keys generated in the same order are always the same ones when generated sequentially from the initial state. In this case, the data for identifying the encryption key used when each individual piece of the encrypted cut data generated by the condition data generating means is encrypted may indicate the order in which the encryption key is generated. If the keys generated by the encryption key generating means in the same order are always the same ones, it is easy to have the data for identifying the encryption key indicate the order in which the encryption key is generated.

The decryption processing apparatus for decrypting the encrypted data generated by the encryption processing apparatus needs to include the same key generating means as that of the encryption processing apparatus.

The encryption processing apparatus including the encryption key generating means may comprise encryption key solution generating means for sequentially generating solutions which are pseudo-random numbers so that the solutions generated in the same order from the initial state are always the same ones. In this case, the encryption key generating means generates the encryption keys based on the solutions received from the encryption key solution generating means. And in this case, the data for identifying the encryption key used when each individual piece of the encrypted cut data generated by the condition data generating means is encrypted may indicate the solution used when the encryption key is generated.

The encryption key generating means of the encryption processing apparatus generates the encryption keys based on the sequentially generated solutions which are pseudo-random numbers. Therefore, if the data for identifying the solution is included in the condition data, the decryption processing apparatus for decrypting the encrypted data generated by the encryption processing apparatus can generate the encryption key based on the solution and decrypt the encrypted cut data with the encryption key.

As described above, the encryption processing apparatus including the encryption key generating means may comprise encryption key solution generating means for sequentially generating solutions which are pseudo-random numbers so that the solutions generated in the same order from the initial state are always the same ones.

In this case, the encryption key generating means generates the encryption keys based on the solutions received from the encryption key solution generating means, and the data for identifying the encryption key used when each individual piece of the encrypted cut data generated by the condition data generating means is encrypted may indicate the order in which the solution used when generating the encryption key is generated.

The encryption key generating means of the encryption processing apparatus generates the encryption keys based on the sequentially generated solutions which are pseudo-random numbers, where the solutions generated in the same order are always the same ones. Therefore, the decryption processing apparatus for decrypting the encrypted data generated by the encryption processing apparatus can identify the solution if the order in which it is generated is known. And if the solution is identified, the decryption processing apparatus can generate the encryption key based on the solution and decrypt the encrypted cut data with the encryption key.

As for the decryption processing apparatus for decrypting the encrypted data generated by the two encryption processing apparatuses, however, it is necessary to include the same encryption key generating means and encryption key solution generating means as those of the encryption processing apparatuses.

As described above, there are the cases where the condition data generating means generates multiple pieces of the condition data.

In this case, the encryption processing apparatus may include condition data encryption key holding means holding multiple condition data encryption keys which are the keys used when the condition data encrypting means encrypts the condition data.

And the condition data encrypting means may use at least two of the multiple condition data encryption keys held by the condition data encryption key holding means and thereby render multiple pieces of the condition data as the encrypted condition data so as to encrypt at least one of them with a condition data encryption key different from that of the other pieces of the condition data, and the basic condition data generating means may generate the basic condition data including the data on which of the condition data encryption keys held by the condition data encryption key holding means is used to render each individual piece of the encrypted condition data as the encrypted condition data.

The encryption processing apparatus has the multiple encryption keys prepared in advance so as to use the multiple keys when encrypting the condition data as in the above-mentioned case of having the multiple encryption keys prepared in advance so as to use the multiple keys when encrypting the plain text cut data.

The decryption processing apparatus for decrypting the encrypted data generated by the encryption processing apparatus needs to include the same condition data encryption key holding means as that of the encryption processing apparatus.

The encryption processing apparatus can improve the security of the encrypted data by using the multiple condition data encryption keys to encrypt the condition data.

The condition data generating means of the encryption processing apparatus of this application may generate multiple pieces of the condition data. In this case, the apparatus includes condition data encryption key generating means for generating condition data encryption keys which are the keys used when the condition data encrypting means encrypts the condition data in predetermined timing, and the condition data encrypting means uses the multiple condition data encryption keys generated by the condition data encryption key generating means and thereby renders multiple pieces of the condition data as the encrypted condition data so as to encrypt at least one of them with a condition data encryption key different from that of the other pieces of the condition data while the basic condition data generating means generates the basic condition data including the data for identifying the condition data encryption keys used when each individual piece of the encrypted condition data is encrypted.

This is intended to sequentially generate multiple condition data encryption keys and thereby allowing the multiple keys to be used on encrypting the condition data as in the above-mentioned case of sequentially generating multiple encryption keys and thereby allowing the multiple keys to be used on encrypting the plain text cut data.

The following invention is also similar to the above-mentioned invention for generating multiple encryption keys.

This encryption processing apparatus also has the effect of improving the security of the encrypted data.

The condition data encryption key generating means generates the condition data encryption keys so that the condition data encryption keys generated in the same order are always the same ones in the case of sequentially generating the condition data encryption keys from the initial state, and the data for identifying the condition data encryption key used when each individual piece of the encrypted condition data generated by the basic condition data generating means is encrypted may indicate the order in which the condition data encryption key is generated.

The encryption processing apparatus may be the one comprising: condition data encryption key solution generating means for sequentially generating solutions which are pseudo-random numbers so that the solutions generated in the same order from an initial state are always the same ones, and wherein: the condition data encryption key generating means generates the condition data encryption keys based on the solutions received from the condition data encryption key solution generating means; and the data for identifying the condition data encryption key used when each individual piece of the encrypted condition data generated by the basic condition data generating means is encrypted indicates the solution used when the condition data encryption key is generated.

The encryption processing apparatus may also be the one comprising: condition data encryption key solution generating means for sequentially generating solutions which are pseudo-random numbers so that the solutions generated in the same order from an initial state are always the same ones, and wherein: the condition data encryption key generating means generates the condition data encryption keys based on the solutions received from the condition data encryption key solution generating means; and the data for identifying the condition data encryption key used when each individual piece of the encrypted condition data generated by the basic condition data generating means is encrypted indicates the order in which the solution used when generating the condition data encryption key is generated.

As for the decryption processing apparatus for decrypting the encrypted data generated by the two encryption processing apparatuses, however, it is necessary to include the same condition data encryption key generating means and condition data encryption key solution generating means as those of the encryption processing apparatuses.

The encryption processing apparatus of the present invention may use multiple encryption keys as described above. It is also possible to use multiple encryption algorithms instead.

For instance, the encryption processing apparatus may comprise encryption algorithm holding means holding multiple encryption algorithms which are algorithms used when the encrypting means encrypts the plain text cut data. In this case, the encrypting means uses at least two of the multiple encryption algorithms held by the encryption algorithm holding means and thereby renders multiple pieces of the plain text cut data as the encrypted cut data so as to encrypt at least one of them with an encryption algorithm different from that of the other pieces of plain text cut data, and the condition data generating means generates the condition data including the data on which of the encryption algorithms held by the encryption algorithm holding means is used to render each individual piece of the encrypted cut data as the encrypted cut data.

This also improves the security of the encrypted data generated by the encryption processing apparatus.

The decryption processing apparatus for decrypting the encrypted data generated by the encryption processing apparatus needs to include the same encryption algorithm holding means as that of the encryption processing apparatus.

The above described the encryption processing apparatus for generating the encryption keys successively. However, the encryption processing apparatus of this application may also generate multiple encryption algorithms successively instead of generating multiple encryption keys successively.

The encryption processing apparatus is the one comprising: encryption algorithm generating means for generating encryption algorithms which are the algorithms used when the encrypting means encrypts the plain text cut data in predetermined timing, and wherein: the encrypting means uses the multiple encryption algorithms generated by the encryption algorithm generating means and thereby renders multiple pieces of the plain text cut data as the encrypted cut data so as to encrypt at least one of them with an encryption algorithm different from that of the other pieces of the plain text cut data; and the condition data generating means generates the condition data including the data for identifying the encryption algorithm used when each individual piece of the encrypted cut data is encrypted.

In this case, the encryption algorithm generating means generates the encryption algorithms so that the encryption algorithms generated in the same order are always the same ones in the case of sequentially generating the encryption algorithms from the initial state; and the data for identifying the encryption algorithm used when each individual piece of the encrypted cut data generated by the condition data generating means is encrypted may indicate the order in which the encryption algorithm is generated.

The encryption processing apparatus including the encryption algorithm generating means for generating the encryption algorithms so that the encryption algorithms generated in the same order are always the same ones may be the apparatus comprising: encryption algorithm solution generating means for sequentially generating solutions which are pseudo-random numbers so that the solutions generated in the same order from the initial state are always the same ones, and wherein: the encryption algorithm generating means generates the encryption algorithms based on the solutions received from the encryption algorithm solution generating means; and the data for identifying the encryption algorithm used when each individual piece of the encrypted cut data generated by the condition data generating means is encrypted indicates the solution used when the encryption algorithm is generated.

The encryption processing apparatus may also be the one comprising: encryption algorithm solution generating means for sequentially generating solutions which are pseudo-random numbers so that the solutions generated in the same order from the initial state are always the same ones, and wherein: the encryption algorithm generating means generates the encryption algorithms based on the solutions received from the encryption algorithm solution generating means; and the data for identifying the encryption algorithm used when each individual piece of the encrypted cut data generated by the condition data generating means is encrypted indicates the order in which the solution used when generating the encryption algorithm is generated.

As described above, there are the cases where the condition data generating means generates multiple pieces of the condition data. A description was given as to the encryption processing apparatus for encrypting at least one of the generated multiple pieces of the condition data with a condition data encryption key different from that of the other pieces. Instead, it is also possible to encrypt at least one of the generated multiple pieces of the condition data with a condition data encryption algorithm different from that of the other pieces.

For instance, it becomes possible by means of the following encryption processing apparatus.

To be more specific, the encryption processing apparatus is the one wherein the condition data generating means generates multiple pieces of the condition data; the apparatus includes condition data encryption algorithm holding means holding multiple condition data encryption algorithms which are the algorithms used when the condition data encrypting means encrypts the condition data; the condition data encrypting means uses at least two of the multiple condition data encryption algorithms held by the condition data encryption algorithm holding means and thereby renders multiple pieces of the condition data as the encrypted condition data so as to encrypt at least one of them with a condition data encryption algorithm different from that of the other pieces of the condition data; and the basic condition data generating means generates the condition data including the data on which of the condition data encryption algorithms held by the condition data encryption algorithm holding means is used to render each individual piece of the encrypted condition data as the encrypted condition data.

In the case where the condition data generating means of the encryption processing apparatus generates multiple pieces of the condition data, it is also possible to encrypt at least one of the generated multiple pieces of the condition data with a condition data encryption algorithm different from that of the other pieces by generating the condition data encryption algorithms successively.

For instance, the encryption processing apparatus is the one wherein: the condition data generating means generates multiple pieces of the condition data; the apparatus includes condition data encryption algorithm generating means for generating condition data encryption algorithms which are the algorithms used when the condition data encrypting means encrypts the condition data in predetermined timing; the condition data encrypting means uses the multiple condition data encryption algorithms generated by the condition data encryption algorithm generating means and thereby renders multiple pieces of the condition data as the encrypted condition data so as to encrypt at least one of them with a condition data encryption algorithm different from that of the other pieces of the condition data; and the basic condition data generating means generates the basic condition data including the data for identifying the condition data encryption algorithms used when each individual piece of the encrypted condition data is encrypted.

The encryption processing apparatus may be the one wherein: the condition data encryption algorithm generating means generates the condition data encryption algorithms so that the condition data encryption algorithms generated in the same order are always the same ones in the case of sequentially generating the condition data encryption algorithms from the initial state; and the data for identifying the condition data encryption algorithm used when each individual piece of the encrypted condition data generated by the basic condition data generating means is encrypted indicates the order in which the condition data encryption algorithm is generated.

The encryption processing apparatus including the condition data encryption algorithm generating means for generating the condition data encryption algorithms so that the condition data encryption algorithms generated in the same order are always the same ones is the one comprising: condition data encryption algorithm solution generating means for sequentially generating solutions which are pseudo-random numbers so that the solutions generated in the same order from the initial state are always the same ones, and wherein: the condition data encryption algorithm generating means generates the condition data encryption algorithms based on the solutions received from the condition data encryption algorithm solution generating means; and the data for identifying the condition data encryption algorithm used when each individual piece of the encrypted condition data generated by the basic condition data generating means is encrypted indicates the solution used when the condition data encryption algorithm is generated.

The encryption processing apparatus including the condition data encryption algorithm generating means may be the one comprising: condition data encryption algorithm solution generating means for sequentially generating solutions which are pseudo-random numbers so that the solutions generated in the same order from the initial state are always the same ones, and wherein: the condition data encryption algorithm generating means generates the condition data encryption algorithms based on the solutions received from the condition data encryption algorithm solution generating means; and the data for identifying the condition data encryption algorithm used when each individual piece of the encrypted condition data generated by the basic condition data generating means is encrypted indicates the order in which the solution used when generating the condition data encryption algorithm is generated.

A data structure of the encrypted data generated by the encryption processing apparatus of the present invention is as described below, which has a high level of security in each case.

To be more specific, the data structure of encrypted data is the one connecting the following as one to render them as a series and premised to be decrypted by a predetermined decryption processing apparatus: multiple pieces of encrypted cut data obtained by encrypting multiple pieces of plain text cut data obtained by cutting subject data in plain text by a predetermined number of bits with a predetermined key and a predetermined algorithm; encrypted condition data obtained by encrypting condition data including data on at least one of a condition in the case of allowing decryption of each individual piece of the encrypted cut data and a condition in the case of prohibiting decryption of each individual piece of the encrypted cut data with a predetermined key and a predetermined algorithm; and basic condition data including data on at least one of a condition in the case of allowing decryption of the encrypted condition data and a condition in the case of prohibiting decryption of the encrypted condition data, and wherein: as for the encrypted cut data, the encrypted condition data and the basic condition data, the encrypted condition data is positioned ahead of the encrypted cut data having its decryption allowed or prohibited according to the condition included in the condition data which is a source of the encrypted condition data and the basic condition data is positioned ahead of the encrypted condition data.

This data structure may have multiple pieces of the condition data to satisfy the following conditions (1) to (3):
(1) each individual piece of the condition data is associated with at least one of the pieces of the encrypted cut data and includes the data on at least one of the condition in the case of allowing the decryption of the associated encrypted cut data or the condition in the case of prohibiting the decryption of the associated encrypted cut data;
(2) as for the multiple pieces of the condition data, every piece of the encrypted cut data is associated with one of the multiple pieces of the condition data; and
(3) no one piece of the encrypted cut data is associated with multiple pieces of the condition data.
   In this case, the basic condition data may include the data on at least one of the condition of which piece of the encrypted condition data should have its decryption allowed and the condition of which piece of the encrypted condition data should have its decryption prohibited.
   There are multiple pieces of the condition data, and at least one of the pieces of the condition data may include the data on the condition in the case of allowing the decryption of the encrypted condition data generated by encrypting the other condition data.
   There are multiple pieces of the condition data, and at least several pieces out of the multiple pieces of the condition data are associated to decrypt the encrypted condition data generated by encrypting those several pieces of the condition data in predetermined order, and each of those several pieces of the condition data may include data on a condition for decrypting the encrypted condition data to be decrypted following the encrypted condition data generated by encrypting the condition data. In this case, the basic condition data may include a condition in the case of allowing decryption of a piece to be decrypted first out of the pieces of the encrypted condition data generated by encrypting several pieces of the condition data.
   The condition data included in the above-mentioned data structure may include the data on at least one of the following (4) to (7):
(4) information for identifying the decryption processing apparatus allowed to perform or prohibited from performing the decryption of at least one piece of the encrypted cut data;
(5) information for identifying a user allowed to perform or prohibited from performing the decryption of at least one piece of the encrypted cut data;
(6) at least one of information on a period allowing the decryption of at least one piece of the encrypted cut data and information on a period prohibiting the decryption of at least one piece of the encrypted cut data; and
(7) information on which of the multiple pieces of the encrypted cut data should have its decryption allowed or which of the multiple pieces of the encrypted cut data should have its decryption prohibited.

Each individual piece of the encrypted cut data in the data structure of the present invention is encrypted by using one of multiple encryption keys so as to encrypt at least one of multiple pieces of the plain text cut data with an encryption key different from that of the other pieces of the plain text cut data, and the condition data includes the data on which of the multiple encryption keys is used to render each individual piece of the encrypted cut data as the encrypted cut data.

The encrypted data in the data structure of the present invention is generated by an encryption processing apparatus comprising encryption key generating means for generating multiple encryption keys in predetermined timing; each individual piece of the encrypted cut data is encrypted by using one of the multiple encryption keys generated by the encryption key generating means so as to encrypt at least one of the multiple pieces of the plain text cut data with an encryption key different from that of the other pieces of the plain text cut data; and the condition data includes the data for identifying the encryption key used when each individual piece of the encrypted cut data is encrypted.

The data structure of the present invention may be as follows in the case where it is generated by the encryption processing apparatus comprising the encryption key generating means for generating multiple encryption keys in predetermined timing.

To be more specific, the encryption key generating means generates the encryption keys so that the encryption keys generated in the same order are always the same ones in the case of generating the encryption keys sequentially from an initial state, and the data for identifying the encryption key used when each individual piece of the encrypted cut data included in the condition data is encrypted indicates the order in which the encryption key is generated.

The encrypted data generated by the encryption processing apparatus comprising the encryption key generating means can be as follows.

To be more specific, the encrypted data is generated by an encryption processing apparatus comprising encryption key solution generating means for sequentially generating solutions which are pseudo-random numbers so that the solutions generated in the same order from the initial state are always the same ones; the encryption key generating means generates the encryption keys based on the solutions received from the encryption key solution generating means; and the data for identifying the encryption key used when each individual piece of the encrypted cut data included in the condition data is encrypted indicates the solution used when the encryption key is generated.

Or else, the encrypted data is generated by an encryption processing apparatus comprising encryption key solution generating means for sequentially generating solutions which are pseudo-random numbers so that the solutions generated in the same order from the initial state are always the same ones; the encryption key generating means generates the encryption keys based on the solutions received from the encryption key solution generating means; and the data for identifying the encryption key used when each individual piece of the encrypted cut data included in the condition data is encrypted indicates the order in which the solution used when generating the encryption key is generated.

The data structure of encrypted data of the present invention may have multiple pieces of the condition data. In this case, each individual piece of the encrypted condition data is encrypted by using one of multiple condition data encryption keys so as to encrypt at least one of multiple pieces of the condition data with a condition data encryption key different from that of the other pieces of the condition data; and the basic condition data includes the data on which of the multiple condition data encryption keys is used to render each individual piece of the encrypted condition data as the encrypted condition data.

The data structure of encrypted data of the present invention may have multiple pieces of the condition data. In this case, the encrypted condition data is generated by an encryption processing apparatus comprising condition data encryption key generating means for generating multiple condition data encryption keys in predetermined timing; each individual piece of the encrypted condition data is encrypted by using one of the multiple condition data encryption keys generated by the condition data encryption key generating means so as to encrypt at least one of the multiple pieces of the condition data with a condition data encryption key different from that of the other pieces of the condition data; and the basic condition data includes the data for identifying the condition data encryption key used when each individual piece of the encrypted condition data is encrypted.

The data structure of the present invention may be as follows in the case where it is generated by the encryption processing apparatus comprising the condition data encryption key generating means for generating the multiple condition data encryption keys in predetermined timing.

To be more specific, the condition data encryption key generating means generates the condition data encryption keys so that the condition data encryption keys generated in the same order are always the same ones in the case of sequentially generating the condition data encryption keys from the initial state, and the data for identifying the condition data encryption key used when each individual piece of the encrypted condition data included in the basic condition data is encrypted indicates the order in which the condition data encryption key is generated.

The encrypted data generated by the encryption processing apparatus comprising the condition data encryption key generating means may be as follows.

To be more specific, the encrypted data is generated by an encryption processing apparatus comprising condition data encryption key solution generating means for sequentially generating solutions which are pseudo-random numbers so that the solutions generated in the same order from the initial state are always the same ones, and wherein: the condition data encryption key generating means generates the condition data encryption keys based on the solutions received from the condition data encryption key solution generating means; and the data for identifying the condition data encryption key used when each individual piece of the encrypted condition data included in the basic condition data is encrypted indicates the solution used when the condition data encryption key is generated.

Or else, the encrypted data is generated by an encryption processing apparatus comprising condition data encryption key solution generating means for sequentially generating solutions which are pseudo-random numbers so that the solutions generated in the same order from the initial state are always the same ones, and wherein: the condition data encryption key generating means generates the condition data encryption keys based on the solutions received from the condition data encryption key solution generating means; and the data for identifying the condition data encryption key used when each individual piece of the encrypted condition data included in the basic condition data is encrypted indicates the order in which the solution used when generating the condition data encryption key is generated.

Each individual piece of the encrypted cut data in the data structure of the present invention is encrypted by using one of multiple encryption algorithms so as to encrypt at least one of multiple pieces of the plain text cut data with an encryption algorithm different from that of the other pieces of the plain text cut data, and the condition data includes the data on which of the multiple encryption algorithms is used to render each individual piece of the encrypted cut data as the encrypted cut data.

The encrypted data in the data structure of the present invention is generated by an encryption processing apparatus comprising encryption algorithm generating means for generating multiple encryption algorithms in predetermined timing; each individual piece of the encrypted cut data is encrypted by using one of the multiple encryption algorithms generated by the encryption algorithm generating means so as to encrypt at least one of the multiple pieces of the plain text cut data with an encryption algorithm different from that of the other pieces of the plain text cut data; and the condition data includes the data for identifying the encryption algorithm used when each individual piece of the encrypted cut data is encrypted.

The data structure of the present invention can be as follows in the case where it is generated by the encryption processing apparatus comprising the encryption algorithm generating means for generating multiple encryption algorithms in predetermined timing.

To be more specific, the encryption algorithm generating means generates the encryption algorithms so that the encryption algorithms generated in the same order are always the same ones in the case of generating the encryption algorithms sequentially from the initial state, and the data for identifying the encryption algorithm used when each individual piece of the encrypted cut data included in the condition data is encrypted indicates the order in which the encryption algorithm is generated.

The encrypted data generated by the encryption processing apparatus comprising the encryption algorithm generating means can be as follows.

To be more specific, the encrypted data is generated by an encryption processing apparatus comprising encryption algorithm solution generating means for sequentially generating solutions which are pseudo-random numbers so that the solutions generated in the same order from the initial state are always the same ones; the encryption algorithm generating means generates the encryption algorithms based on the solutions received from the encryption algorithm solution generating means; and the data for identifying the encryption algorithm used when each individual piece of the encrypted cut data included in the condition data is encrypted indicates the solution used when the encryption algorithm is generated.

Or else, the encrypted data is generated by an encryption processing apparatus comprising encryption algorithm solution generating means for sequentially generating solutions which are pseudo-random numbers so that the solutions generated in the same order from the initial state are always the same ones; the encryption algorithm generating means generates the encryption algorithms based on the solutions received from the encryption algorithm solution generating means; and the data for identifying the encryption algorithm used when each individual piece of the encrypted cut data included in the condition data is encrypted indicates the order in which the solution used when generating the encryption algorithm is generated.

The data structure of encrypted data of the present invention may have multiple pieces of the condition data. In this case, each individual piece of the encrypted condition data is encrypted by using one of multiple condition data encryption algorithms so as to encrypt at least one of multiple pieces of the condition data with a condition data encryption algorithm different from that of the other pieces of the condition data, and the basic condition data includes the data on which of the multiple condition data encryption algorithms is used to render each individual piece of the encrypted condition data as the encrypted condition data.

The data structure of encrypted data of the present invention may have multiple pieces of the condition data. In this case, the encrypted condition data is generated by an encryption processing apparatus comprising condition data encryption algorithm generating means for generating multiple condition data encryption algorithms in predetermined timing; each individual piece of the encrypted condition data is encrypted by using one of the multiple condition data encryption algorithms generated by the condition data encryption algorithm generating means so as to encrypt at least one of the multiple pieces of the condition data with a condition data encryption algorithm different from that of the other pieces of the condition data; and the basic condition data includes the data for identifying the condition data encryption algorithm used when each individual piece of the encrypted condition data is encrypted.

The data structure of the present invention can be as follows in the case where it is generated by the encryption processing apparatus comprising the condition data encryption algorithm generating means for generating multiple condition data encryption algorithms in predetermined timing.

To be more specific, the condition data encryption algorithm generating means generates the condition data encryption algorithms so that the condition data encryption algorithms generated in the same order are always the same ones in the case of sequentially generating the condition data encryption algorithms from the initial state, and the data for identifying the condition data encryption algorithm used when each individual piece of the encrypted condition data included in the basic condition data is encrypted indicates the order in which the condition data encryption algorithm is generated.

The encrypted data generated by the encryption processing apparatus comprising the condition data encryption algorithm generating means can be as follows.

To be more specific, the encrypted data is generated by an encryption processing apparatus comprising condition data encryption algorithm solution generating means for sequentially generating solutions which are pseudo-random numbers so that the solutions generated in the same order from the initial state are always the same ones; and the condition data encryption algorithm generating means generates the condition data encryption algorithms based on the solutions received from the condition data encryption algorithm solution generating means; and the data for identifying the condition data encryption algorithm used when each individual piece of the encrypted condition data included in the basic condition data is encrypted indicates the solution used when the condition data encryption algorithm is generated.

Or else, the encrypted data is generated by an encryption processing apparatus comprising condition data encryption algorithm solution generating means for sequentially generating solutions which are pseudo-random numbers so that the solutions generated in the same order from the initial state are always the same ones; the condition data encryption algorithm generating means generates the condition data encryption algorithms based on the solutions received from the condition data encryption algorithm solution generating means; and the data for identifying the condition data encryption algorithm used when each individual piece of the encrypted condition data included in the basic condition data is encrypted indicates the order in which the solution used when generating the condition data encryption algorithm is generated.

The encrypted data generated by the encryption processing apparatus of the present invention can be decrypted by the following decryption processing apparatus for instance.

To be more specific, the decryption processing apparatus is the one comprising: basic condition data reading means for reading basic condition data from the encrypted data; encrypted condition data reading means for reading the encrypted condition data from the encrypted data; encrypted cut data reading means for reading the encrypted cut data from the encrypted data; encrypted condition data decrypting means for decrypting the encrypted condition data to render it as the condition data if determined that the encrypted condition data read by the encrypted condition data reading means matches with a condition in the case of allowing decryption of the encrypted condition data indicated in the basic condition data read by the basic condition data reading means or if determined that the encrypted condition data does not match with a condition in the case of prohibiting the decryption of the encrypted condition data; decrypting means for decrypting each individual piece of the encrypted cut data read by the encrypted cut data reading means to render it as the plain text cut data only if determined that the encrypted cut data indicated in the condition data decrypted by the encrypted condition data decrypting means matches with a condition in the case of allowing decryption or if determined that the encrypted cut data does not match with a condition in the case of prohibiting the decryption; and connecting means for connecting the plain text cut data decrypted by the decrypting means as one to render it as the subject data.

Or else, the decryption processing apparatus is the one comprising: basic condition data reading means for reading the basic condition data from the encrypted data; encrypted condition data reading means for reading the encrypted condition data from the encrypted data; encrypted cut data reading means for reading the encrypted cut data from the encrypted data; encrypted condition data decrypting means for decrypting the encrypted condition data to render it as the condition data if determined that the encrypted condition data read by the encrypted condition data reading means matches with a condition in the case of allowing decryption of the encrypted condition data indicated in the basic condition data read by the basic condition data reading means or if determined that the encrypted condition data does not match with a condition in the case of prohibiting the decryption of the encrypted condition data; decrypting means for decrypting the encrypted cut data to render it as the plain text cut data only if determined that each individual piece of the encrypted cut data read by the encrypted cut data reading means matches with a condition in the case of allowing decryption of the encrypted cut data indicated in the condition data decrypted by the encrypted condition data decrypting means or if determined that the encrypted cut data does not match with a condition in the case of prohibiting the decryption of the encrypted cut data; and connecting means for connecting the plain text cut data decrypted by the decrypting means as one to render it as the subject data, and wherein: the encrypted condition data decrypting means decrypts the encrypted condition data to render it as the condition data only if determined that each individual piece of the encrypted condition data read by the encrypted condition data reading means matches with a condition as to which of multiple pieces of the encrypted condition data should have its decryption allowed or if it does not match with a condition as to which of the multiple pieces of the encrypted condition data should have its decryption prohibited; and the decrypting means decrypts the encrypted cut data to render it as the plain text cut data based only on the decrypted condition data.

The following method is implemented by the decryption processing apparatus for instance.

The decryption method implemented by the decryption processing apparatus is the one comprising the steps for the decryption processing apparatus of: reading the basic condition data from the encrypted data; reading the encrypted condition data from the encrypted data; reading the encrypted cut data from the encrypted data; decrypting the encrypted condition data to render it as the condition data if determined that the read encrypted condition data matches with a condition in the case of allowing decryption of the encrypted condition data indicated in the read basic condition data or if determined that the encrypted condition data does not match with a condition in the case of prohibiting the decryption thereof; decrypting each individual piece of the read encrypted cut data to render it as the plain text cut data only if determined that the encrypted cut data indicated in the decrypted condition data matches with a condition in the case of allowing the decryption thereof or if determined that the encrypted cut data does not match with a condition in the case of prohibiting the decryption thereof; and connecting the plain text cut data decrypted by the decrypting means as one to render it as the subject data.

Or else, the decryption method implemented by the decryption processing apparatus is the one comprising the steps of: reading the basic condition data from the encrypted data; reading the encrypted condition data from the encrypted data; reading the encrypted cut data from the encrypted data; decrypting the encrypted condition data to render it as the condition data if determined that the read encrypted condition data matches with a condition in the case of allowing decryption of the encrypted condition data indicated in the read basic condition data or if determined that the encrypted condition data does not match with a condition in the case of prohibiting the decryption thereof; decrypting the encrypted cut data to render it as the plain text cut data only if determined that each individual piece of the encrypted cut data read by the encrypted cut data reading means matches with a condition in the case of allowing the decryption of the encrypted cut data indicated in the condition data decrypted by the encrypted condition data decrypting means or if determined that the encrypted cut data does not match with a condition in the case of prohibiting the decryption thereof; and connecting the decrypted plain text cut data as one to render it as the subject data, and wherein: in the step of decrypting the encrypted condition data to render it as the condition data, the encrypted condition data is decrypted to render it as the condition data only if determined that each individual piece of the encrypted condition data matches with a condition as to which of multiple pieces of the encrypted condition data should have its decryption allowed or if it does not match with a condition as to which of the multiple pieces of the encrypted condition data should have its decryption prohibited; and in the step of decrypting the encrypted cut data to render it as the plain text cut data, the encrypted cut data is decrypted to render it as the plain text cut data based only on the decrypted condition data.

### Brief Description of the Drawings

FIG. 1 is a diagram showing an overall configuration of an encryption system according to a first embodiment;
FIG. 2 is a diagram showing a hardware configuration of an encryption processing apparatus included in the encryption system shown in FIG. 1;
FIG. 3 is a block diagram showing the configuration of an encryption apparatus included in the encryption processing apparatus shown in FIG. 2;
FIGS. 4 are diagrams showing a data configuration of encrypted data generated by the encryption processing apparatus shown in FIG. 2;
FIG. 5 is a diagram showing the hardware configuration of a decryption processing apparatus included in the encryption system shown in FIG. 1;
FIG. 6 is a block diagram showing the configuration of a decryption apparatus included in the decryption processing apparatus shown in FIG. 5;
FIG. 7 is a flowchart showing a flow of a process performed in the encryption system shown in FIG. 1;
FIG. 8 is a flowchart showing the flow of the process performed in S 110 shown in FIG. 7;
FIG. 9 is a flowchart showing the flow of the process performed in S 130 shown in FIG. 7;
FIG. 10 is a block diagram showing the configuration according to a deformed example of the encryption apparatus shown in FIG. 3;
FIG. 11 is a block diagram showing the configuration according to a deformed example of the decryption apparatus shown in FIG. 6;
FIG. 12 is a block diagram showing the configuration of the encryption apparatus included in the encryption processing apparatus of a second embodiment; and
FIG. 13 is a block diagram showing the configuration of the decryption apparatus included in the decryption processing apparatus of the second embodiment.

### Detailed Description of the Preferred Embodiments

Hereunder, first and second embodiments of the present invention will be described.

The same subjects will be given the same symbols, and overlapping descriptions will be omitted as the case may be in the descriptions of the embodiments.

### <<First Embodiment>>

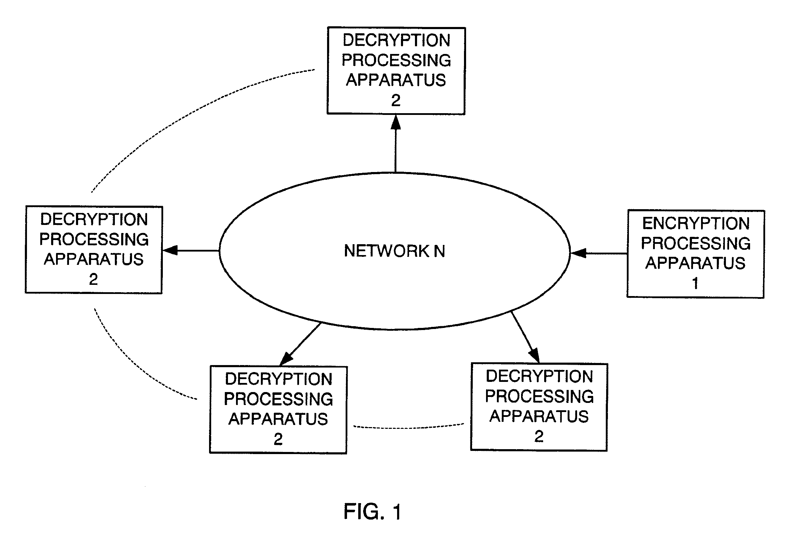

This embodiment takes up an encryption system including an encryption processing apparatus 1 and multiple decryption processing apparatuses 2 as shown in FIG. 1 as an embodiment of the present invention.

The encryption processing apparatus 1 and the decryption processing apparatuses 2 are connected by a network N such as an LAN (Local Area Network), where the encryption processing apparatus 1 can transmit encrypted data generated as described later to each of the decryption processing apparatuses 2.

However, the encryption processing apparatus 1 and the decryption processing apparatuses 2 do not always have to be connected by the network N. In this regard, however, the decryption processing apparatuses 2 must be able to receive the encrypted data generated by the encryption processing apparatus 1 from the encryption processing apparatus 1 via a recording medium such as a CD-ROM. A description will be omitted as to a data writer for recording the encrypted data on the recording medium and a data reader for reading the encrypted data from the recording medium for that purpose because those are general-purpose technologies.

There are the cases where at least one decryption processing apparatus 2 is sufficient or the cases where the encryption processing apparatus 1 doubles as the decryption processing apparatus 2.

Configurations of the encryption processing apparatus 1 and the decryption processing apparatuses 2 will be described. First, the configuration of the encryption processing apparatus 1 will be described.

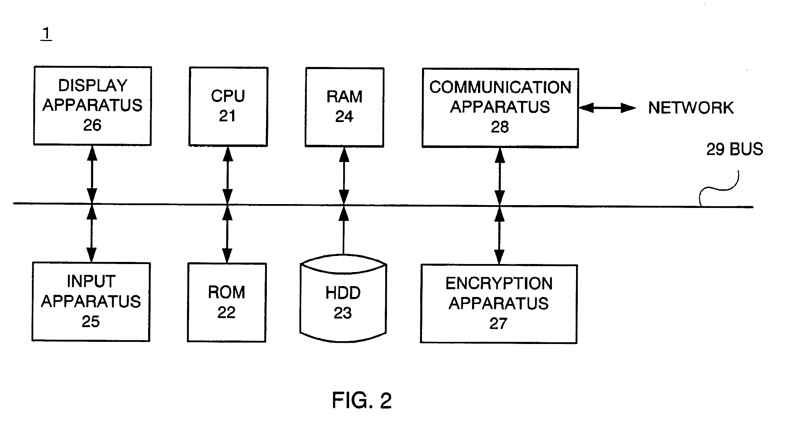

FIG. 2 shows a hardware configuration of the encryption processing apparatus 1.

According to this embodiment, the encryption processing apparatus 1 has the configuration including a CPU (central processing unit) 21, an ROM (read only memory) 22, an HDD (hard disk drive) 23, an RAM (random access memory) 24, an input apparatus 25, a display apparatus 26, an encryption apparatus 27, a communication apparatus 28 and a bus 29. The CPU 21, ROM 22, HDD 23, RAM 24, input apparatus 25, display apparatus 26, encryption apparatus 27 and communication apparatus 28 can exchange data via the bus 29.

The ROM 22 or the HDD 23 has predetermined programs and predetermined data (the predetermined data may include the data to be subject data as in this embodiment and also includes the data necessary to execute the programs) recorded therein. The CPU 21 controls the entire encryption processing apparatus 1, and performs a process described later based on the programs and data stored in the ROM 22 or the HDD 23. The RAM 24 is used as a work storage area on performing the process in the CPU 21.

The input apparatus 25 is configured by a keyboard, a mouse and the like, and is used to input commands and data. The display apparatus 26 is configured by an LCD (liquid crystal display), a CRT (cathode ray tube) and the like, and is used to display the commands, inputted data and situation of the process described later and the like.

The encryption apparatus 27 performs encryption of the subject data and decryption of the encrypted data described later.

The communication apparatus 28 performs communication with the decryption processing apparatuses 2 via the network N. The communication apparatus 28 transmits the encrypted data to a destination designated by an MAC address and the like included in a header described later of the encrypted data described later.

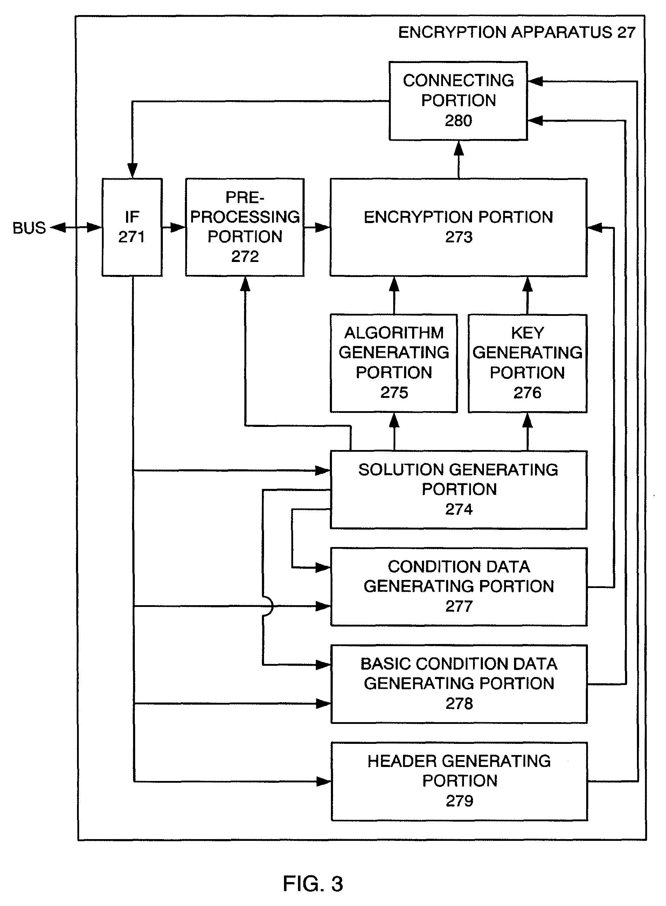

Next, the configuration of the encryption apparatus 27 will be described. FIG. 3 shows a block diagram of the encryption apparatus 27.

The encryption apparatus 27 is configured by an interface portion 271, a preprocessing portion 272, an encryption portion 273, a solution generating portion 274, an algorithm generating portion 275, a key generating portion 276, a condition data generating portion 277, a basic condition data generating portion 278, a header generating portion 279 and a connecting portion 280.

The interface portion 271 exchanges the data between the bus 29 and the communication apparatus 28.

The interface portion 271 receives the subject data from the HDD 23 via the bus 29, and transmits the received subject data to the preprocessing portion 272. In the case where the interface portion 271 receives the subject data or the encrypted data, it transmits the data to that effect to the solution generating portion 274.

As will be described later, the interface portion 271 receives the encrypted data from the connecting portion 280, and transmits the received data to the bus 29. The encrypted data is transmitted to the decryption processing apparatuses 2 via the communication apparatus 28 by way of the network N.

The preprocessing portion 272 has a function of cutting the subject data received from the bus 29 via the interface portion 271 by a predetermined number of bits, generating plain text cut data and transmitting it to the encryption portion 273. How to cut the subject data will be described later. According to this embodiment, the preprocessing portion 272 has a function of including dummy data which is the data unrelated to the subject data in the subject data by a method described later.

The encryption portion 273 has a function of receiving the plain text cut data from the preprocessing portion 272 and encrypting it. The encryption portion 273 also has a function of receiving condition data described later from the condition data generating portion 277 and encrypting it. The condition data generating portion 277 cuts the generated condition data by a reference number of bits described later in advance and then transmits it to the encryption portion 273.

The encryption portion 273 of this embodiment has the reference number of bits as a processing unit in the case of performing encryption fixed. The reference number of bits in this embodiment is 8 bits though it is not limited thereto. Details of encryption processing will be described later.

The solution generating portion 274 generates solutions sequentially. As for the solutions generated by the solution generating portion 274 of the encryption processing apparatus 1, the solutions generated in the same order are always the same ones. A decryption apparatus of the decryption processing apparatus 2 described later also has the solution generating portion which is the same as the solution generating portion 274 provided to the encryption processing apparatus 1. To be more specific, if the solutions generated in the same order are compared, the solutions generated by the solution generating portion 274 provided to the encryption processing apparatus 1 are the same as the solutions generated by the solution generating portion provided to the decryption processing apparatus 2. The solutions in this embodiment are pseudo-random numbers. The generated solutions are transmitted to the preprocessing portion 272, algorithm generating portion 275 and key generating portion 276. Information on what number generated solution the solution is transmitted from the solution generating portion 274 to the condition data generating portion 277 and basic condition data generating portion 278.

The algorithm generating portion 275 generates algorithms based on the solutions received from the solution generating portion 274. These algorithms are used when performing the encryption processing in the encryption portion 273.

The key generating portion 276 generates keys based on the solutions received from the solution generating portion 274. The keys are used when performing the encryption processing in the encryption portion 273.

The condition data generating portion 277 generates condition data based on the data received via the interface portion 271 from the input apparatus operated by a user for instance.

The condition data includes the data on at least one of a condition in the case of allowing decryption of each individual piece of the encrypted cut data and a condition in the case of prohibiting decryption of each individual piece of the encrypted cut data in the decryption processing apparatus 2.

This embodiment has multiple pieces of the condition data.

Each individual piece of the condition data is associated with at least one of multiple pieces of the encrypted cut data. However, there are no such cases where one piece of the encrypted cut data has multiple pieces of the condition data associated therewith. Every piece of the encrypted cut data is associated with one of the multiple pieces of the condition data.

The condition data includes the data on at least one of the condition in the case of allowing the decryption of the associated encrypted cut data and the condition in the case of prohibiting the decryption of the associated encrypted cut data. The condition data may also include the above-mentioned information on what number generated solution the solution received from the solution generating portion 274 is (this information indicates what number solution the key and algorithm used to encrypt each individual piece of the encrypted cut data associated with the condition data are based on). However, the information on what number generated solution the solution included in the condition data is does not have to be included as to all the solutions. It is sufficient to include the information on what number generated solution each of the solutions used on encrypting the encrypted cut data allowed to be decrypted by the decryption processing apparatus 2 is.

The condition in the case of allowing the decryption of the associated encrypted cut data included in the condition data and the condition in the case of prohibiting the decryption of the associated encrypted cut data are any ones of or combinations of the following (A) to (D):
(A) information for identifying the decryption processing apparatus allowed to perform or prohibited from performing the decryption of the encrypted cut data;
(B) information for identifying the user allowed to perform or prohibited from performing the decryption of at least one piece of the encrypted cut data;
(C) at least one of information on a period allowing the decryption of at least one piece of the encrypted cut data and information on a period prohibiting the decryption of at least one piece of the encrypted cut data; and
(D) information on which of the multiple pieces of the encrypted cut data should have its decryption allowed or information on which of the multiple pieces of the encrypted cut data should have its decryption prohibited.

The generated condition data is transmitted to the encryption portion 273 to be encrypted and rendered as encrypted condition data there.

The basic condition data generating portion 278 generates basic condition data based on the data received via the interface portion 271 from the input apparatus operated by the user for instance.

The basic condition data includes the data on at least one of the condition in the case of allowing the decryption of encrypted condition data and the condition in the case of prohibiting the decryption of the encrypted condition data in the decryption processing apparatus 2. There are multiple pieces of the encrypted condition data in this embodiment. Therefore, as for the basic condition data in this embodiment, the decryption processing apparatus 2 generates the basic condition data including the data on at least one of the condition as to which of the multiple pieces of the encrypted condition data should have its decryption allowed and the condition as to which of the multiple pieces of the encrypted condition data should have its decryption prohibited.

To be more precise, there are the cases where the basic condition data includes the above-mentioned information on what number generated solution the solution received from the solution generating portion 274 is (this information indicates what number solution the key and algorithm used to encrypt each individual piece of the encrypted condition data allowed to be decrypted by the decryption processing apparatus 2 are based on). In this embodiment, however, the information indicating what order the solution is generated in included in the basic condition data is only the information indicating the order in which the solution used when encrypting the encrypted condition data allowed to be decrypted by the decryption processing apparatus 2 is generated.

The basic condition data generating portion 278 transmits the generated basic condition data to the connecting portion 280.

The header generating portion 279 generates header data to become the header of the encrypted data based on the data received via the interface portion 271 from the input apparatus operated by the user for instance.

The header data has an address of the encryption processing apparatus 1 as a source of the encrypted data, an address of the decryption processing apparatus 2 as a destination of the encrypted data and the like described therein.

The header generating portion 279 transmits the generated header data to the connecting portion 280.

The connecting portion 280 has a function of connecting the encrypted cut data generated by encrypting the plain text cut data in the encryption portion 273 to render it as the encrypted data in one bundle. The connecting portion 280 of this embodiment connects the encrypted condition data received from the encryption portion 273, the basic condition data generated by the basic condition data generating portion 278 and the header data generated by the header generating portion 279 in addition to the encrypted cut data received from the encryption portion 273 so as to render them as the encrypted data in one bundle.

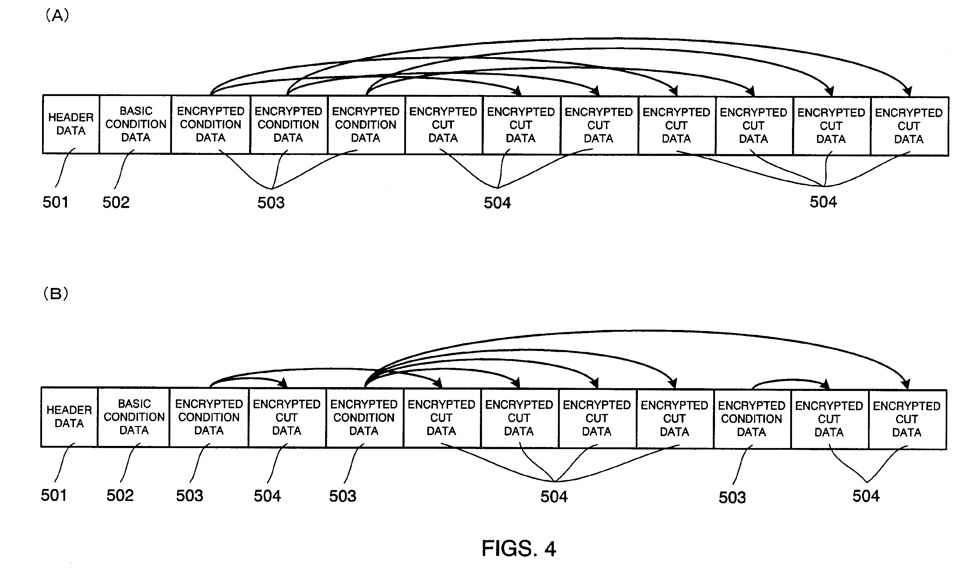

A data structure of the encrypted data is as exemplified in FIGS. 4. While the number of pieces of encrypted cut data 504 is much larger in reality, FIGS. 4 describe the number much smaller for convenience of illustration.

As shown in FIGS. 4 (A) and 4 (B), the encrypted data has the above-mentioned header data 501 placed at a head of it (the left side is equivalent to the head of the encrypted data in FIGS. 4).

The above-mentioned basic condition data 502 is placed immediately following the header data 501. The basic condition data 502 needs to be placed ahead of a piece placed at the forefront out of the pieces of encrypted condition data 503 described later. Therefore, the basic condition data 502 is placed immediately following the header data 501 in the encrypted data shown in FIGS. 4 (A) and 4 (B). It is also possible, however, to place the basic condition data 502 in the header data 501.

As for both the pieces of the encrypted data shown in FIGS. 4 (A) and 4 (B), the basic condition data 502 is followed by the encrypted condition data 503 and encrypted cut data 504.

As for the encrypted data of FIG. 4 (A), the basic condition data 502 is followed by multiple pieces of the encrypted condition data 503 and further followed by multiple pieces of the encrypted cut data 504.

As for the encrypted data of FIG. 4 (B), the basic condition data 502 is followed by the encrypted condition data 503 and the encrypted cut data 504 intricately placed. However, the encrypted condition data 503 is placed ahead of the encrypted cut data 504 generated by encrypting the plain text cut data associated with the condition data which is the source of the encrypted condition data 503.

Arrows drawn from the encrypted condition data 503 to the encrypted cut data 504 in FIGS. 4 (A) and 4 (B) indicate that the condition data which is the source of the encrypted condition data 503 positioned at the start of the arrows is associated with the plain text cut data which is the source of the encrypted cut data 504 positioned at the end of the arrows.

The encrypted data generated by the connecting portion 280 is transmitted to the interface portion 271, transmitted from there to the communication apparatus 28 via the bus 29 and further to the decryption processing apparatus 2 via the network N.

Next, the configuration of the decryption processing apparatus 2 will be described.

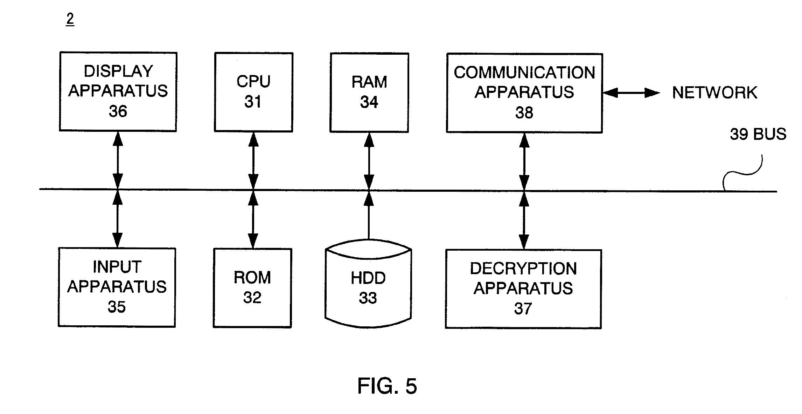

The hardware configuration of the decryption processing apparatus 2 is as shown in FIG. 5.

The decryption processing apparatus 2 comprises a CPU 31, an ROM 32, an HDD 33, an RAM 34, an input apparatus 35, a display apparatus 36, a decryption apparatus 37, a communication apparatus 38 and a bus 39. The CPU 31, ROM 32, HDD 33, RAM 34, input apparatus 35, display apparatus 36 and bus 39 of the decryption processing apparatus 2 have the same configurations and functions as the CPU 21, ROM 22, HDD 23, RAM 24, input apparatus 25, display apparatus 26 and bus 29 of the encryption processing apparatus 1. The HDD 33 of the decryption processing apparatus 2 holds the MAC address of the decryption processing apparatus 2.

The communication apparatus 38 of the decryption processing apparatus 2 can receive the encrypted data transmitted from the encryption processing apparatus 1 via the network N.

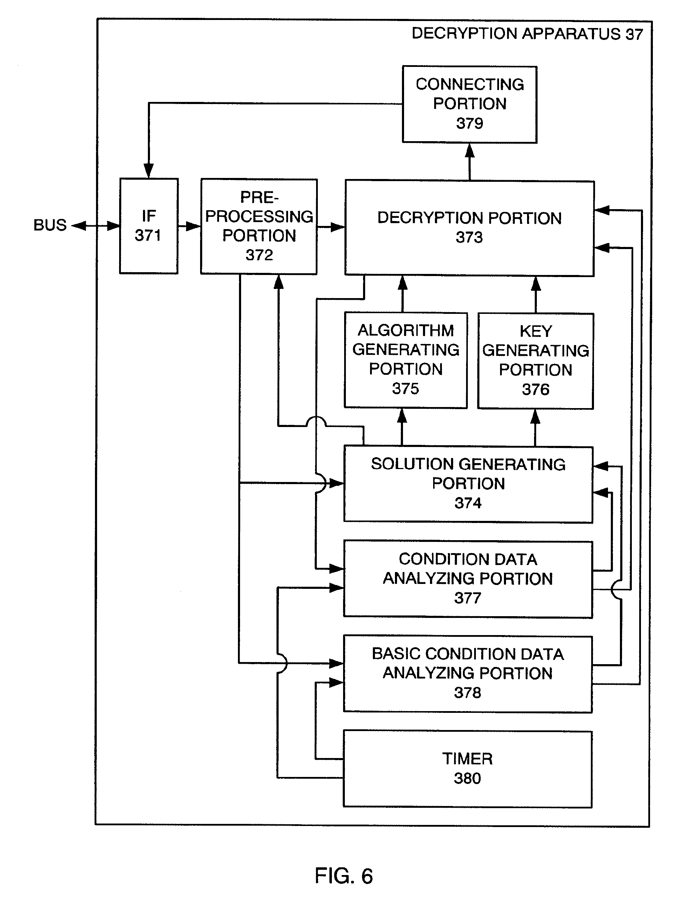

The decryption apparatus 37 decrypts the encrypted data received from the encryption processing apparatus 1, and is configured as shown in FIG. 6.

The decryption apparatus 37 is configured by an interface portion 371, a preprocessing portion 372, a decryption portion 373, a solution generating portion 374, an algorithm generating portion 375, a key generating portion 376, a condition data analyzing portion 377, a basic condition data analyzing portion 378, connecting portion 379 and a timer 380.

The interface portion 371 receives the encrypted data from the communication apparatus 38 via the bus 39, and transmits the received encrypted data to the preprocessing portion 372.

As will be described later, the interface portion 371 also receives the subject data from the connecting portion 379, and transmits the received subject data to the bus 39.

The preprocessing portion 372 eliminates the header data from the encrypted data received from the bus 39 via the interface portion 371 and takes out the basic condition data so as to transmit the basic condition data taken out to the basic condition data analyzing portion 378.

The preprocessing portion 372 also takes out the encrypted condition data from the encrypted data and transmits it to the decryption portion 373 under a condition described later.

The preprocessing portion 372 also takes out the encrypted cut data and transmits it to the decryption portion 373 under a condition described later.

The preprocessing portion 372 cuts the encrypted condition data and the encrypted cut data by the same number of bits as the reference number of bits of the encryption processing apparatus 1, and transmits them to the decryption portion 373.

The decryption portion 373 has a function of decrypting the encrypted condition data and the encrypted cut data received from the preprocessing portion 372. The decryption portion 373 of this embodiment has the reference number of bits as the processing unit in the case of performing decryption processing fixed to be the same as that of the encryption processing apparatus 1. The reference number of bits in this embodiment is 8 bits though it is not limited thereto. Details of the decryption processing will be described later.

The solution generating portion 374 generates the solutions sequentially. As described above, the solutions generated by the solution generating portion 374 are the same solutions as the solutions generated by the solution generating portion 274 of the encryption processing apparatus 1 if the solutions generated in the same order are mutually compared. The generated solutions are transmitted to the preprocessing portion 372, algorithm generating portion 375 and key generating portion 376.

The algorithm generating portion 375 generates the algorithms based on the solutions received from the solution generating portion 374. The algorithms are used when performing the decryption processing in the decryption portion 373. The algorithms generated by the algorithm generating portion 375 of the decryption processing apparatus 2 become the same ones as the algorithms generated in the same order by the algorithm generating portion 275 of the encryption processing apparatus 1.

The key generating portion 376 generates the keys based on the solutions received from the solution generating portion 374. The keys are used when performing the decryption processing in the decryption portion 373. The keys generated by the key generating portion 376 of the decryption processing apparatus 2 become the same ones as the keys generated in the same order by the key generating portion 276 of the encryption processing apparatus 1.

The condition data analyzing portion 377 receives the condition data transmitted from the decryption portion 373, and analyzes the contents indicated in the condition data.

The information on the contents of the condition data analyzed by the condition data analyzing portion 377 is transmitted to the solution generating portion 374 or the decryption portion 373.

The basic condition data analyzing portion 378 receives the basic condition data transmitted from the preprocessing portion 372, and analyzes the contents indicated in the basic condition data.

The information on the contents of the basic condition data analyzed by the basic condition data analyzing portion 378 is transmitted to the solution generating portion 374 or the decryption portion 373.

The function of the connecting portion 379 of the decryption processing apparatus 2 is approximately the same as that of the encryption processing apparatus 1. The connecting portion 379 connects the plain text cut data generated by decrypting the encrypted cut data in the decryption portion 373 as one to generate the subject data. The subject data is the same as or a part of the original subject data encrypted by the encryption processing apparatus 1. The subject data is transmitted to the HDD 33 via the bus 39.

The timer 380 is a clock for measuring current time. The timer 380 transmits time data on the time at that point in time to the condition data analyzing portion 377 and the basic condition data analyzing portion 378 as required.

Next, a flow of the processing performed by this encryption system will be described.

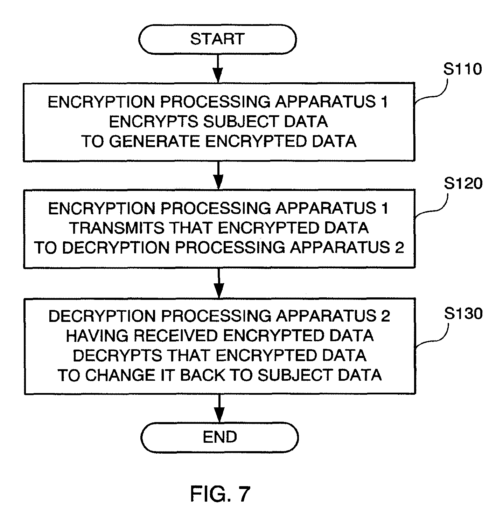

To describe an overview by using FIG. 7, the flow of the processing performed by this data processing system is as follows.

First, the encryption processing apparatus 1 generates the encrypted data by encrypting the subject data (S 110).

Next, the encryption processing apparatus 1 transmits the encrypted data to the decryption processing apparatus 2 (S120).

Next, the decryption processing apparatus 2 having received the encrypted data decrypts the encrypted data to render it as the subject data (S 130).

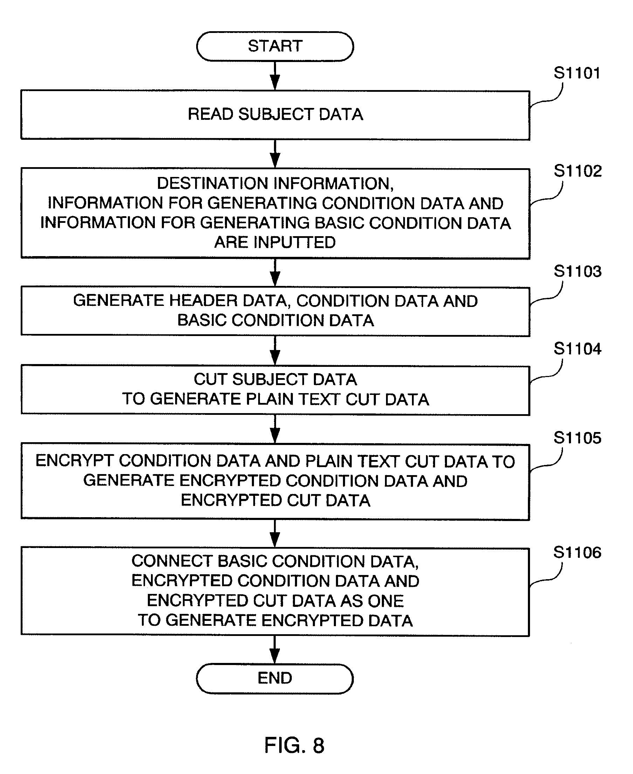

First, a detailed description will be given by referring to FIG. 8 as to the above-mentioned step of S 110 in which the encryption processing apparatus 1 generates the encrypted data by encrypting the subject data.

First, the subject data is read (S1101). The subject data may be any data necessary to be transmitted from the encryption processing apparatus 1 to the decryption processing apparatus 2. The subject data is recorded in the HDD 23 according to this embodiment. It is also possible to render some data read from another recording medium such as an external recording medium to the encryption processing apparatus 1 as the subject data.

In the case where a command for transmitting the subject data to the decryption processing apparatus 2 is inputted from the input apparatus 25 for instance, the CPU 21 reads the subject data from the HDD 23 and transmits it to the encryption apparatus 27 via the bus 29. To be more precise, the subject data is transmitted from the bus 29 to the interface portion 271 in the encryption apparatus 27, and is transmitted to the preprocessing portion 272 from there.

Just before or after reading the subject data, destination information on which decryption processing apparatus 2 the encrypted data obtained by encrypting the subject data should be transmitted to, information for generating the condition data and information for generating the basic condition data are inputted from the input apparatus 25 (S1102). The destination information, information for generating the condition data and information for generating the basic condition data are transmitted by the CPU 21 to the encryption apparatus 27 via the bus 29. To be more precise, the destination information is transmitted to the header generating portion 279 via the interface portion 371, the information for generating the condition data is transmitted to the condition data generating portion 277 via the interface portion 371, and the information for generating the basic condition data is transmitted to the basic condition data generating portion 278 via the interface portion 371.

The header generating portion 279 having received the destination information generates the header data, the condition data generating portion 277 having received the information for generating the condition data generates the condition data, and the basic condition data generating portion 278 having received the information for generating the basic condition data generates the basic condition data (S 1103).

The header data, condition data and basic condition data have the above-mentioned contents.

In the case where the condition data or the basic condition data includes the information on what number generated solution the solution is, however, the condition data generating portion 277 and the basic condition data generating portion 278 receive the information on what number generated solution the solution is from the solution generating portion 274 and then generate the condition data and the basic condition data. In the case of encrypting the same subject data more than once and transmitting multiple pieces of the encrypted data thereby generated to multiple different decryption processing apparatuses 2, the pieces of the condition data to be encrypted and then included as the encrypted condition data in the respective pieces of the encrypted data may be mutually different. This also applies to the basic condition data.

According to this embodiment, each individual piece of the condition data includes one of the following and the information on what number generated solution the solution used on generating the key and algorithm used on encrypting the plain text cut data associated with the condition data is:
(A) information for identifying the decryption processing apparatus allowed to perform or prohibited from performing the decryption of the encrypted cut data;
(B) information for identifying the user allowed to perform or prohibited from performing the decryption of the encrypted cut data;
(C) at least one of information on a period allowing the decryption of at least one piece of the encrypted cut data and information on a period prohibiting the decryption of at least one piece of the encrypted cut data; and
(D) information on which of the multiple pieces of the encrypted cut data should have its decryption allowed or information on which of the multiple pieces of the encrypted cut data should have its decryption prohibited.

Instead of the information on what number generated solution the solution used on generating the key and algorithm used on encrypting the plain text cut data is, the condition data may include the solution itself used on generating the key and algorithm used on generating the plain text cut data associated with the condition data or the key and algorithm themselves used on encrypting the plain text cut data associated with the condition data.

The basic condition data of this embodiment includes the data on at least one of the condition for allowing the decryption of each individual piece of the encrypted condition data and the condition for prohibiting the decryption of each individual piece of the encrypted condition data on the decryption processing apparatus 2 (these may be equivalent to the above (A) to (D)) and the information on what number generated solution the solution used on generating the key and algorithm used on encrypting each individual piece of the encrypted condition data is. Instead of the information on what number generated solution the solution used on generating the key and algorithm used on encrypting each individual piece of the encrypted condition data is, the basic condition data may include the solution itself used on generating the key and algorithm used on encrypting each individual piece of the encrypted condition data or the key and algorithm themselves used on encrypting each individual piece of the encrypted condition data.

The header data is transmitted to the connecting portion 280 from the header generating portion 279, and the basic condition data is transmitted to the connecting portion 280 from the basic condition data generating portion 278. The condition data is transmitted to the encryption portion 273 from the condition data generating portion 277.

In the preprocessing portion 272, the subject data is cut by a predetermined number of bits and is rendered as the plain text cut data (S1104). The preprocessing portion 272 includes the dummy data in the plain text cut data as required.

It is acceptable to have just one method of generating the plain text cut data from the subject data. According to this embodiment, however, the plain text cut data is generated from the subject data by one of the following three methods:
X) the case of cutting the subject data by a predetermined number of bits shorter than the reference number of bits and rendering it as the plain text cut data, and including the dummy data at predetermined positions in the respective pieces of the plain text cut data all of which have the number of bits shorter than the reference number of bits;
Y) the case of cutting the subject data by the predetermined number of bits shorter than the reference number of bits and rendering it as the plain text cut data, and including the dummy data at different positions in the respective pieces of the plain text cut data all of which have the number of bits shorter than the reference number of bits; and
Z) the case of cutting the subject data by a predetermined number of bits equal to or shorter than the reference number of bits and rendering it as the plain text cut data, and including the dummy data in the respective pieces of the plain text cut data all of which have the number of bits shorter than the reference number of bits.

It is decided by the solution generated by the solution generating portion 274 as to which of the above-mentioned three methods should be used to generate the plain text cut data from the subject data.

Thus, a description will be given first as to how the solution generating portion 274 generates the solutions.

In the case where the interface portion 271 receives the subject data from the bus 29, the solution generating portion 274 receives the information from the interface portion 271.

On this opportunity, the solution generating portion 274 starts generating the solutions. According to this embodiment, the solution generating portion 274 generates the solution each time the subject data is received by the interface portion 271. The solution in this embodiment is a matrix (X) with 8 rows and 8 columns though it is not limited thereto.

According to this embodiment, the solution generating portion 274 generates the solutions successively as if transitioning nonlinearly though it is not a must. These solutions consequently become pseudo-random numbers.

To generate the solutions successively as if transitioning nonlinearly, there are thinkable techniques, such as (1) including exponentiations of past solutions in the process of generating the solutions, (2) including multiplication of two or more past solutions in the process of generating the solutions, or combining (1) and (2).

According to this embodiment, the solution generating portion 274 has a 01^{st} solution (X₀₁) and a 02^{nd} solution (X₀₂) as an initial matrix which is predetermined (for instance, the 01^{st} solution and 02^{nd} solution are recorded in a predetermined memory such as the HDD 23 or the ROM 22). The initial matrix of the encryption processing apparatus 1 is the same as the initial matrix of the decryption processing apparatus 2 as will be described later.

The solution generating portion 274 assigns the initial matrix to a solution generating algorithm held by the solution generating portion 274 so as to generate a 1^{st} solution (X₁) as follows.
1^{st} solution (X₁) = X₀₂ X₀₁ + α (α = matrix with 8 rows and 8 columns)
   This is the solution generated first.
   Next, in the case where the interface portion 271 receives the subject data from the bus 29, the solution generating portion 274 generates a 2^{nd} solution (X₂) as follows.
2^{nd} solution (X₂) = X₁ X₀₂ + α
   Likewise, each time the interface portion 271 receives the subject data from the bus 29, the solution generating portion 274 generates a 3^{rd} solution, a 4^{th} solution, ... an N^{th} solution as follows.
3^{rd} solution (X₃) = X₂ X₁ + α
4^{th} solution (X₄) = X₃ X₂ + α
:
N^{th} solution (X_{N}) = X_{N-1} X_{N-2} + α

The solutions thus generated are transmitted to the preprocessing portion 272, algorithm generating portion 275 and key generating portion 276, and are held by the solution generating portion 274. To generate the N^{th} solution (X_{N}), an (N-1)^{th} solution (X_{N-1}) and an (N-2)^{th} solution (X_{N-2}) which are the solutions generated immediately before it in short are used in this embodiment. Therefore, when generating a new solution, the solution generating portion 274 must hold the two nearest solutions generated in the past (or else, a portion other than the solution generating portion 274 must hold the two solutions). Inversely, the solutions generated in the past which are older than the two nearest solutions are not to be used to generate a new solution in the future. Therefore, the past two solutions are always held by the solution generating portion 274 in this embodiment. However, the solution having been the second nearest solution till then which becomes the third nearest solution by having the new solution generated is to be erased from the predetermined memory in which the solution has been recorded. The initial matrix is held without being erased.

The solutions thus generated are chaotic and transitioning nonlinearly, and are pseudo-random numbers.

To transition nonlinearly, the following formulas may be used when seeking the N^{th} solution in addition to using the above-mentioned formula of N^{th} solution (X_{N}) = X_{N-1} X_{N-2} + α:
for instance,
   (a) N^{th} solution (X_{N}) = (X_{N-1})^{P}
   (b) N^{th} solution (X_{N}) = (X_{N-1})^{P}(X_{N-2})^{Q}(X_{N-3})^{R}(X_{N-4})^{S}
   (c) N^{th} solution (X_{N}) = (X_{N-1})^{P} + (X_{N-2})^{Q}
   P, Q, R and S are predetermined constants respectively. The solution generating portion 274 has two initial matrixes in the case of using the formula (a) or (c) and four initial matrixes in the case of using the formula (b).

The above-mentioned α is a constant. However, it may also be a piece of specific changing environmental information. This environmental information is the information which is self-generated one after another as time elapses and obtainable in common at distant places, such as the information set up based on weather in a specific region, the information set up based on the contents of a television broadcast of a certain TV station done at a specific time and the information set up according to results of a specific sport.

It is possible to improve confidentiality of communication by creating the above-mentioned α one after another and generating common information from such environmental information.

It is also possible, as a matter of course, to add α (this may be generated from the environmental information) to right sides of the above-mentioned formulas (a) to (c).

The preprocessing portion 272 having received the solutions generated as described above (that is, the above-mentioned solutions) decides which of the above-mentioned methods X), Y) and Z) should be used to generate the plain text cut data accordingly. According to this embodiment, a sum of the numbers configuring the matrix with 8 rows and 8 columns as the solution added up is divided by 3. The plain text cut data is generated by the method of X) if a remainder thereof is 0, by the method of Y) if the remainder is 1, and by the method of Z) if a remainder thereof is 2 respectively though it is not limited thereto.

In the case of generating the plain text cut data by the method of X), the preprocessing portion 272 generates the plain text cut data by cutting the subject data received from the interface portion 271 by the predetermined number of bits (7 bits in this embodiment) shorter than the reference number of bits in order from the top of the subject data. The preprocessing portion 272 embeds the dummy data at a fixed position of the plain text cut data. The position of the plain text cut data for embedding the dummy data may be either changeable or fixed. In the latter case, the position for embedding the dummy data can be the top, end or a predetermined intermediate position such as a second bit or a third bit of the plain text cut data for instance. The dummy data may be any data unrelated to the subject data. For instance, there is a thinkable process, such as constantly embedding the data of 0, embedding the data of 1 or alternately embedding the data of 1 and 0. As a further example, it is possible to decide what dummy data should be embedded based on the above-mentioned solutions. For instance, the sum of the numbers configuring the matrix with 8 rows and 8 columns as the solution added up is divided by 9. 0 is successively placed such as 0, 0, 0, 0 ... if the remainder thereof is 0, 1 is alternately placed such as 0, 1, 0, 1 ... if the remainder is 1, 1 is inserted at every third place such as 0, 0, 1, 0, 0, 1 ... if the remainder is 2, and likewise, 1 is inserted at every fourth place if the remainder is 3, at every fifth place if the remainder is 4, ... and at every tenth place if the remainder is 9.

In the case of generating the plain text cut data by the method of Y), the preprocessing portion 272 cuts the subject data by the predetermined number of bits (7 bits for instance) shorter than the reference number of bits to render it as the plain text cut data, and includes the dummy data in the pieces of the plain text cut data all of which have the number of bits shorter than the reference number of bits. In this case, the position for embedding the dummy data can be either fixed or regularly changing such as moving in order of the 1^{st} bit, 2^{nd} bit, 3^{rd} bit ... 8^{th} bit, 1^{st} bit, 2^{nd} bit, 3^{rd} bit ... 8^{th} bit or randomly changing. In the case where the position for embedding the dummy data changes randomly, the position for embedding the dummy data may be decided based on the solutions for instance.

As for the method of deciding the position for embedding the dummy data based on the solutions, the sum of the numbers configuring the matrix with 8 rows and 8 columns as the solution added up is divided by 8. The dummy data is alternately embedded at the top and end of every other piece of the plain text cut data if the remainder thereof is 0, the piece of the plain text cut data having the dummy data embedded at the top thereof and the piece of the plain text cut data having the dummy data embedded at the end thereof are placed at every third place if the remainder is 1, the piece of the plain text cut data having the dummy data embedded at the top thereof and the piece of the plain text cut data having the dummy data embedded at the end thereof are placed at every fourth place if the remainder is 2, ... and the piece of the plain text cut data having the dummy data embedded at the top thereof and the piece of the plain text cut data having the dummy data embedded at the end thereof are placed at every ninth place if the remainder is 7. It is also possible to further move the position for embedding the dummy data instead of fixing that position such as the top and end.

In the case of generating the plain text cut data by the method of Z), the subject data is cut by the number of bits equal to or shorter than the reference number of bits. This cutting is feasible by cutting the plain text cut data to a random length shorter than 8 bits. For instance, the sum of the numbers configuring the matrix with 8 rows and 8 columns as the solution added up is divided by 8. The top portion of the subject data at that point in time is cut by 8 bits if the remainder thereof is 0, the top portion of the subject data at that point in time is cut by 1 bit if the remainder is 1, the top portion of the subject data at that point in time is cut by 2 bits if the remainder is 2, ... and the top portion of the subject data at that point in time is cut by 7 bits if the remainder is 7. Of the pieces of the plain text cut data thus generated, the preprocessing portion 272 embeds the dummy data in each individual piece of the plain text cut data having the number of bits shorter than the reference number of bits. In this case, the dummy data may be embedded either at a specific position such as the top or the end or a predetermined changing position identified by the solution.

The plain text cut data thus generated is transmitted to the encryption portion 273 in order of generation.

In parallel with the generation of the plain text cut data, the algorithm generating portion 275 generates the algorithms used on encrypting the plain text cut data.

The algorithm generating portion 275 of this embodiment generates the algorithms based on the solutions.

According to this embodiment, the algorithm generating portion 275 generates the algorithms such as the following.

The algorithm in this embodiment is defined as 'what is acquired by, in the case where the plain text cut data which is 8-bit data is a matrix Y with 1 row and 8 columns, multiplying by Y a matrix which is the matrix X with 8 rows and 8 columns as the solution raised to a-th power and turned clockwise by n x 90°.'

Here, a may be a predetermined constant. In this embodiment, however, it is the number which changes based on the solutions. To be more specific, the algorithm in this embodiment changes based on the solutions. For instance, a can be defined as the remainder (provided that it is a = 1 in the case where the remainder is 0) in the case of dividing by 5 the number acquired by adding up all the numbers as elements of the matrix included in the solution which is the matrix with 8 rows and 8 columns.

The above-mentioned n is a predetermined number set up by the key. If the key is a constant number, n is fixed. However, the key changes based on the solution as will be described hereunder. To be more specific, this n also changes based on the solution in this embodiment.

It is also possible, however, to decide the algorithm as something different.

According to this embodiment, the algorithm generating portion 275 generates the algorithm and transmits it to the encryption portion 273 each time it receives the solution from the solution generating portion 274.

In parallel with the generation of the plain text cut data, the key generating portion 276 generates the keys used on encrypting the plain text cut data.

The key generating portion 276 generates the keys based on the solutions.

According to this embodiment, the key generating portion 276 generates the keys such as the following.

The key in this embodiment is defined as the number acquired by adding up all the numbers as elements of the matrix included in the solution which is the matrix with 8 rows and 8 columns. Therefore, the key changes based on the solution according to this embodiment.

It is also possible, however, to decide the key as something different.

According to this embodiment, the key generating portion 276 generates the key and transmits it to the encryption portion 273 each time it receives the solution from the solution generating portion 274.

The encryption portion 273 encrypts the condition data received from the condition data generating portion 277 and the plain text cut data received from the preprocessing portion 272 based on the algorithm received from the algorithm generating portion 275 and the key received from the key generating portion 276 (S1105).

According to this embodiment, the condition data is encrypted first and the plain text cut data is subsequently encrypted.

As described above, the algorithm is defined as 'what is acquired by, in the case where the plain text cut data which is 8-bit data is a matrix Y with 1 row and 8 columns, multiplying by Y a matrix which is the matrix X with 8 rows and 8 columns as the solution raised to a-th power and turned clockwise by n x 90°,' and n as the key is the above-mentioned number.

In the case where a is 3 and n is 6 for instance, the encryption is performed by multiplying by the condition data or the plain text cut data the matrix with 8 rows and 8 columns obtained by turning clockwise the matrix with 8 rows and 8 columns obtained by raising X to 3rd power by 6 x 90° = 540°.

The pieces of data thus generated are the encrypted condition data and the encrypted cut data.

The encrypted condition data and the encrypted cut data are transmitted to the connecting portion 280. The connecting portion 280 connects them with the header data and the basic condition data as one in a structure shown in FIG. 4 so as to generate the encrypted data (S 1106). An alignment sequence of the encrypted cut data in this case is corresponding to the alignment sequence of the original plain text cut data.

As described above, the step of S 110 in which the encryption processing apparatus 1 generates the encrypted data by encrypting the subject data is finished first.

The encrypted data thus generated is transmitted to the communication apparatus 28 in the encryption processing apparatus 1 via the bus 29.

The communication apparatus 28 transmits the encrypted data to the decryption processing apparatus 2 specified by the MAC address included in the header data of the encrypted data via the network N.

Thus, the above-mentioned step of S120 is implemented.

The decryption processing apparatus 2 having received the encrypted data implements the step of S 130 of decrypting the encrypted data to change it back to the subject data.

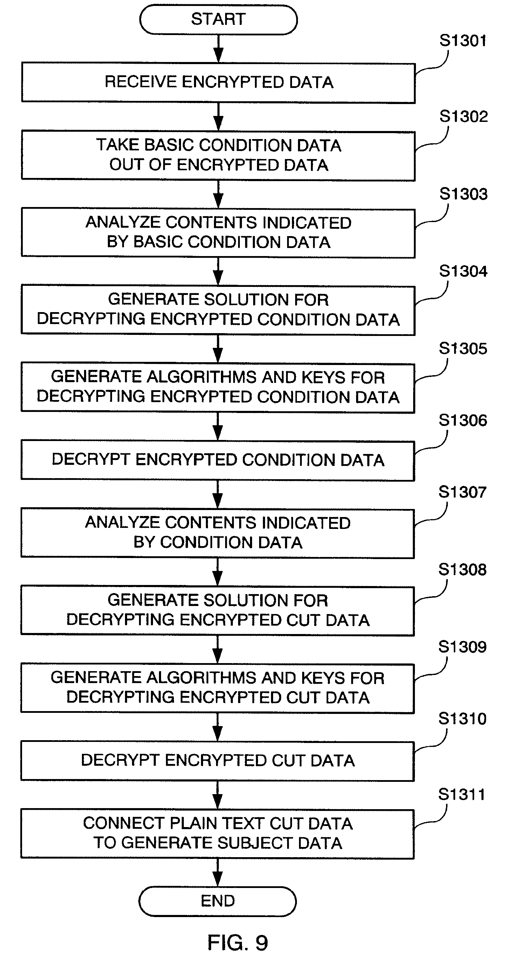

Hereunder, this step of decryption will be described in detail by referring to FIG. 9.

The encrypted data transmitted to the decryption processing apparatus 2 is received by the communication apparatus 38 of the decryption processing apparatus 2 (S1301).

The communication apparatus 38 transmits the encrypted data to the decryption apparatus 37.

The preprocessing portion 372 in the decryption apparatus 37 receives the encrypted data via the interface portion 371.

The preprocessing portion 372 takes the basic condition data out of the received encrypted data (S 1302), and transmits it to the basic condition data analyzing portion 378. The preprocessing portion 372 transmits the encrypted condition data to the decryption portion 373.

The basic condition data analyzing portion 378 analyzes the contents indicated by the basic condition data (S1303). The basic condition data analyzing portion 378 transmits the information on which encrypted condition data should be decrypted determined from this information to the decryption portion 373.

As described above, the basic condition data includes the information on what number generated solution the solution used on generating the key and algorithm used on encrypting each individual piece of the encrypted condition data is. The basic condition data analyzing portion 378 transmits to the solution generating portion 374 the information on what number generated solution the solution used on generating the key and algorithm used on encrypting each individual piece of the encrypted condition data included in the basic condition data is. However, it only transmits to the solution generating portion 374 the information on what number generated solution the solution used on generating the key and algorithm used on encrypting the encrypted condition data of which decryption is allowed or not prohibited according to the condition included in the basic condition data is.

The solution generating portion 374 generates the solutions for decrypting the encrypted condition data based on this information (S1304).

The generation of the solutions performed by the solution generating portion 374 in the decryption apparatus 37 of the decryption processing apparatus 2 is performed by going through the same step as that implemented by the solution generating portion 274 of the encryption processing apparatus 1.

As described above, the solution generating portion 374 has the same initial matrix and solution generating algorithm as those held by the solution generating portion 274 of the encryption processing apparatus 1 associated with the decryption apparatus 37 including the solution generating portion 374. Therefore, the solutions generated in the decryption apparatus 37 of the decryption processing apparatus 2 are the same as the solutions generated in the encryption apparatus 27 of the encryption processing apparatus 1 if those generated in the same order are mutually compared.

The generated solutions are transmitted from the solution generating portion 374 to the algorithm generating portion 375 and the key generating portion 376.

The algorithm generating portion 375 and the key generating portion 376 generate the algorithms and keys for decrypting the encrypted condition data (S1305).

The algorithm generating portion 375 generates the algorithms based on the received information. The step in which the algorithm generating portion 375 of the decryption processing apparatus 2 generates the algorithms is the same as the step in which the algorithm generating portion 275 of the encryption processing apparatus 1 generates the algorithms. The algorithms generated based on the same solution are always the same as those generated by the algorithm generating portion 275 of the encryption processing apparatus 1.

The key generating portion 376 generates the keys based on the received information. The step in which the key generating portion 376 of the decryption processing apparatus 2 generates the keys is the same as the step in which the key generating portion 276 of the encryption processing apparatus 1 generates the keys. The keys generated based on the same solution are always the same as those generated by the key generating portion 276 of the encryption processing apparatus 1.

The decryption processing apparatus 2 generates the same solutions as those generated by the encryption processing apparatus 1 based on the information on what number generated solution the solution used on encrypting the condition data in the encryption processing apparatus 1 is, and generates the algorithms and keys based on it. Therefore, the decryption processing apparatus 2 can generate the same algorithms and keys as those used on encrypting the condition data in the encryption processing apparatus 1.

The generated algorithms are transmitted from the algorithm generating portion 375 to the decryption portion 373. The generated keys are transmitted from the key generating portion 376 to the decryption portion 373.

In the case where the basic condition data includes the solution itself used on generating the key and algorithm used on encrypting each individual piece of the condition data, this data should be transmitted to the algorithm generating portion 375 and the key generating portion 276. In this case, the algorithms generated by the algorithm generating portion 375 and the key generating portion 376 are transmitted from the algorithm generating portion 375 to the decryption portion 373. The generated keys are transmitted from the key generating portion 376 to the decryption portion 373.

In the case where the basic condition data includes the key and algorithm themselves used on encrypting each individual piece of the condition data, they are transmitted to the decryption portion 373.

Next, the decryption portion 373 decrypts the encrypted condition data by using the algorithms and keys received from the algorithm generating portion 375 and the key generating portion 376 (S1306).

To be more precise, the decryption portion 373 generates the algorithms for performing the decryption processing (definition of 'the condition data is what is acquired by, in the case where the encrypted condition data is a matrix Z with 1 row and 8 columns, multiplying by Y an inverse matrix of a matrix which is the matrix X with 8 rows and 8 columns as the solution raised to a-th power and turned clockwise by n x 90°') based on the algorithms received from the algorithm generating portion 375 (definition of 'the encrypted condition data is what is acquired by, in the case where the condition data which is 8-bit data is a matrix Y with 1 row and 8 columns, multiplying by Y a matrix which is the matrix X with 8 rows and 8 columns as the solution raised to a-th power and turned clockwise by n x 90°'), and performs calculation by using the keys so as to perform the decryption processing.

Thus, the decryption portion 373 decrypts the encrypted condition data transmitted from the preprocessing portion 372 and generates the condition data. The encrypted condition data decrypted here is only the encrypted condition data of which decryption is allowed or not prohibited according to the condition included in the basic condition data.

Next, the decrypted condition data is transmitted to the condition data analyzing portion 377.

The condition data analyzing portion 377 analyzes the contents indicated by the condition data (S1307). As described above, the condition data includes at least one of the following (A) to (D) and the information on what number generated solution the solution used when generating the key and algorithm used to encrypt each individual piece of the encrypted cut data is.

The condition data analyzing portion 377 first determines whether or not each individual piece of the encrypted cut data matches with the conditions of the following (A) to (D):
(A) information for identifying the decryption processing apparatus allowed to perform or prohibited from performing the decryption of the encrypted cut data;
(B) information for identifying the user allowed to perform or prohibited from performing the decryption of the encrypted cut data;
(C) at least one of information on a period allowing the decryption of at least one piece of the encrypted cut data and information on a period prohibiting the decryption of at least one piece of the encrypted cut data; and
(D) information on which of the multiple pieces of the encrypted cut data should have its decryption allowed or information on which of the multiple pieces of the encrypted cut data should have its decryption prohibited.

For instance, to determine whether or not it matches with the condition of (A), the condition data analyzing portion 377 reads the MAC address of the decryption processing apparatus 2 from the HDD 33 via the bus 39, and compares the MAC address of the decryption processing apparatus 2 with the information on the MAC address of the decryption processing apparatus 2 allowed to perform or prohibited from performing the decryption of the encrypted cut data included in the condition data.

When determining whether or not it matches with the condition of (B), the condition data analyzing portion 377 has a unique ID and a password allocated to each individual user inputted by the user from the input apparatus 35 and then receives them via the bus 39 for instance so as to compare the ID and password with the IDs and passwords of the users allowed to perform or prohibited from performing the decryption of the encrypted cut data which are included in the condition data of the decryption processing apparatus 2.

When determining whether or not it matches with the condition of (C), the condition data analyzing portion 377 receives the time data from the timer 380 for instance, and compares the current time thereby indicated with the information on the period allowing or prohibiting the decryption of the encrypted cut data.

When determining whether or not it matches with the condition of (D), the condition data analyzing portion 377 individually determines whether each individual piece of the encrypted cut data falls under the encrypted cut data of which decryption is allowed or the encrypted cut data of which decryption is prohibited included in the condition data.

The above method of determination is also performed likewise by the basic condition data analyzing portion 378 in the case where the basic condition data includes the conditions of (A) to (D) though a description thereof is omitted.

Consequently, it is determined that the decryption is not allowed as to the encrypted cut data falling under no condition for allowing the decryption and the encrypted cut data falling under one condition for prohibiting the decryption. It is determined that the decryption is allowed as to the other encrypted cut data.

The condition data analyzing portion 377 transmits this information to the decryption portion 373.

The condition data analyzing portion 377 transmits the information on what number generated algorithm and key those are included in the condition data to the solution generating portion 374. However, the information transmitted to the solution generating portion 374 is only the information on what number generated solution the solution used on generating the key and algorithm used on encrypting the encrypted condition data of which decryption is allowed or not prohibited according to the condition included in the basic condition data is.

The solution generating portion 374 generates the solutions for decrypting the encrypted cut data based on the received information (S 1308).

The generation of the solutions performed by the solution generating portion 374 in the decryption apparatus 37 of the decryption processing apparatus 2 is performed by going through the same step as that implemented by the solution generating portion 274 of the encryption processing apparatus 1.

The generated solutions are transmitted from the solution generating portion 374 to the preprocessing portion 372, the algorithm generating portion 375 and the key generating portion 376.

The algorithm generating portion 375 and the key generating portion 376 generate the algorithms and keys for decrypting the encrypted cut data (S 1309).

The algorithm generating portion 375 generates the algorithms based on the received information. The step in which the algorithm generating portion 375 of the decryption processing apparatus 2 generates the algorithms is the same as the step in which the algorithm generating portion 275 of the encryption processing apparatus 1 generates the algorithms.

The key generating portion 376 generates the keys based on the received information. The step in which the key generating portion 376 of the decryption processing apparatus 2 generates the keys is the same as the step in which the key generating portion 276 of the encryption processing apparatus 1 generates the keys.

For the same reason as the keys and algorithms generated on decrypting the encrypted condition data, the keys and algorithms generated by the decryption processing apparatus 2 on decrypting the encrypted cut data are the same as the keys and algorithms generated by the encryption processing apparatus 1.

The generated algorithms are transmitted from the algorithm generating portion 375 to the decryption portion 373. The generated keys are transmitted from the key generating portion 376 to the decryption portion 373.

In the case where the condition data includes the solution itself used on generating the key and on generating the algorithm used on encrypting each individual piece of the condition data, this data is transmitted to the algorithm generating portion 375 and the key generating portion 376. In this case, the algorithm generated by the algorithm generating portion 375 and the key generated by the key generating portion 376 are transmitted from each of the algorithm generating portion 375 and the key generating portion 376 to the decryption portion 373.

In the case where the basic condition data includes the key and algorithm themselves used on encrypting each individual piece of the condition data, they are transmitted to the decryption portion 373.

Next, the encrypted cut data is decrypted in the decryption portion 373 by using the algorithm and key received from the algorithm generating portion 375 and the key generating portion 376 (S1310). On that occasion, the dummy data is eliminated when necessary.

The generation of the plain text cut data by the decryption of the encrypted cut data is performed as with the above-mentioned step of decrypting the encrypted condition data to generate the condition data.

The elimination of the data is performed as follows.

As described above, the solutions generated by the solution generating portion 374 are transmitted to the preprocessing portion 372. These are the solutions used by the preprocessing portion 272 of the encryption processing apparatus 1 when deciding how the dummy data is embedded in the plain text cut data. To be more specific, the solution held by the preprocessing portion 372 of the decryption apparatus 37 at that point in time indicates how the dummy data is embedded in the encrypted cut data (to be more precise, the plain text cut data before the decryption of the encrypted cut data) which has been completely decrypted (or being decrypted, or yet to be decrypted) by the decryption portion 373 of the decryption processing apparatus 2.

The preprocessing portion 372 transmits to the decryption portion 373 the information on where in the plain text cut data decrypted by the decryption portion 373 the dummy data is embedded. The decryption portion 373 eliminates the dummy data in the plain text cut data by using this information.

The dummy data can be eliminated from the encrypted cut data instead of the plain text cut data generated by decrypting the encrypted cut data.

The encrypted cut data to be decrypted here is only the encrypted cut data of which decryption is allowed or not prohibited according to the condition included in the condition data.

Next, the decrypted plain text cut data is transmitted to the connecting portion 379. The connecting portion 379 generates the subject data by connecting the received plain text cut data as one (S1311).

Thus, the step of S 130 in which the decryption processing apparatus 2 decrypts the encrypted data to change it back to the subject data is finished.

The generated subject data is transmitted from the connecting portion 379 to the interface portion 371, and is then transmitted via the bus 39 to the HDD 33 for instance. The subject data is used by the decryption processing apparatus 2 as appropriate.

### <Deformed Example 1>

A description will be given as to a deformed example 1 which is a first deformed example of the encryption system according to the first embodiment.

The encryption system according to the first embodiment is basically the same as the above-mentioned encryption system. However, the partial configurations of the encryption apparatus 27 of the encryption processing apparatus 1 and the decryption apparatus 37 of the decryption processing apparatus 2 are different from those included in the above-mentioned encryption system.

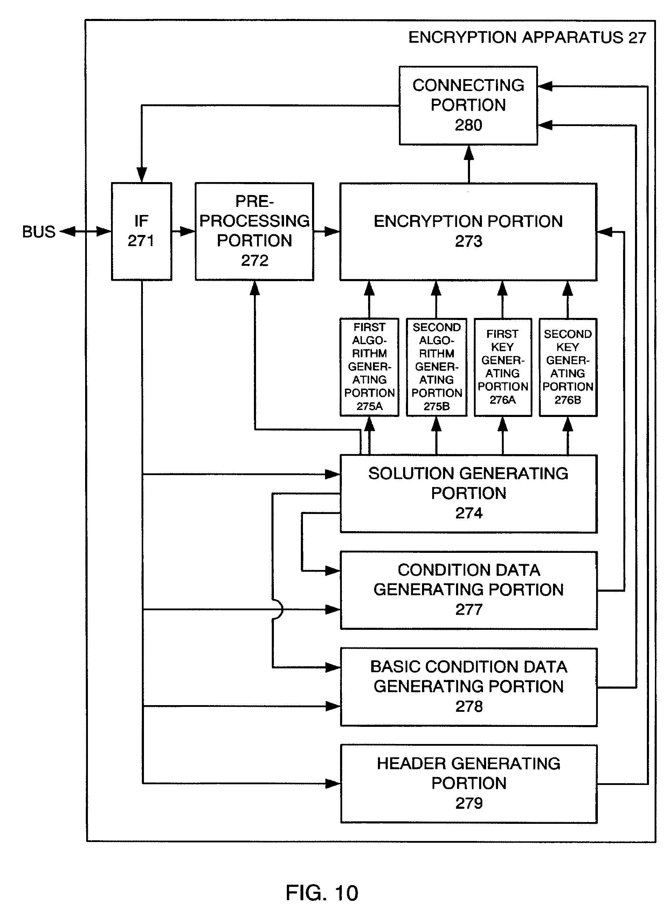

The encryption apparatus 27 of the encryption processing apparatus 1 according to the deformed example 1 is configured as shown in FIG. 10.

The encryption apparatus 27 is different from the case of the first embodiment in that the algorithm generating portion 275 of the first embodiment is replaced by a first algorithm generating portion 275A and a second algorithm generating portion 275B while the key generating portion 276 of the first embodiment is replaced by a first key generating portion 276A and a second key generating portion 276B respectively.

Both the first algorithm generating portion 275A and second algorithm generating portion 275B generate the algorithms as with the algorithm generating portion 275. However, they are different in that the first algorithm generating portion 275A generates the algorithms for encrypting the plain text cut data while the second algorithm generating portion 275B generates the algorithms for encrypting the condition data.

Both the first key generating portion 276A and second key generating portion 276B generate the keys as with the key generating portion 276. However, they are different in that the first key generating portion 276A generates the keys for encrypting the plain text cut data while the second key generating portion 276B generates the keys for encrypting the condition data.

In the case of encrypting the plain text cut data in the deformed example 1, the solution is transmitted from the solution generating portion 274 to the first algorithm generating portion 275A where the algorithm for encrypting the plain text cut data is generated. In the case of encrypting the condition data, the solution is transmitted from the solution generating portion 274 to the second algorithm generating portion 275B where the algorithm for encrypting the condition data is generated.

In the case of encrypting the plain text cut data in the deformed example 1, the solution is transmitted from the solution generating portion 274 to the first key generating portion 276A where the key for encrypting the plain text cut data is generated. In the case of encrypting the condition data, the solution is transmitted from the solution generating portion 274 to the second key generating portion 276B where the key for encrypting the condition data is generated.

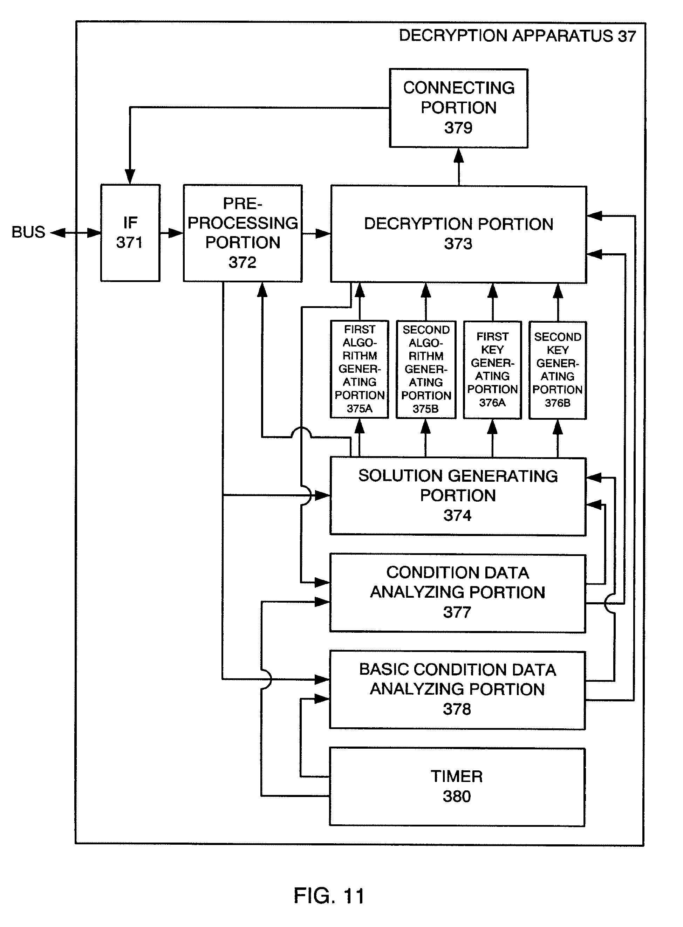

The decryption apparatus 37 of the decryption processing apparatus 2 in the deformed example 1 is configured as shown in FIG. 11.

The decryption apparatus 37 is different from the case of the first embodiment in that the algorithm generating portion 375 of the first embodiment is replaced by a first algorithm generating portion 375A and a second algorithm generating portion 375B while the key generating portion 376 of the first embodiment is replaced by a first key generating portion 376A and a second key generating portion 376B respectively.

Both the first algorithm generating portion 375A and second algorithm generating portion 375B generate the algorithms as with the algorithm generating portion 375. However, they are different in that the first algorithm generating portion 375A generates the algorithms for decrypting the encrypted cut data while the second algorithm generating portion 375B decrypts the encrypted condition data.

Both the first key generating portion 376A and second key generating portion 376B generate the keys as with the key generating portion 376. However, they are different in that the first key generating portion 376A generates the keys for decrypting the encrypted data while the second key generating portion 376B generates the keys for decrypting the encrypted condition data.

In the case of decrypting the encrypted cut data in the deformed example 1, the solution is transmitted from the solution generating portion 374 to the first algorithm generating portion 375A where the algorithm for decrypting the encrypted cut data is generated. In the case of decrypting the encrypted condition data, the solution is transmitted from the solution generating portion 374 to the second algorithm generating portion 375B where the algorithm for decrypting the encrypted condition data is generated.

In the case of decrypting the encrypted cut data in the deformed example 1, the solution is transmitted from the solution generating portion 374 to the first key generating portion 376A where the key for decrypting the encrypted cut data is generated. In the case of decrypting the encrypted condition data, the solution is transmitted from the solution generating portion 374 to the second key generating portion 376B where the key for decrypting the encrypted condition data is generated.

In the deformed example 1, the means for generating the algorithms and the means for generating the keys are divided according to whether the subject of encryption or decryption is the plain text cut data or the encrypted cut data, or the condition data or the encrypted condition data as described above.

It is also possible to divide the solution generating portion 274 in addition to the algorithm generating portion 275 and the key generating portion 276.

For instance, in the case of the encryption processing apparatus 1 of the first embodiment, the solution is transmitted from one solution generating portion 274 to the algorithm generating portion 275 and the key generating portion 276. However, it is also possible to divide the solution generating portion 274 in two such as a first solution generating portion 274A and a second solution generating portion 274B so as to transmit the solution generated by the former to the algorithm generating portion 275 and the solution generated by the latter to the key generating portion 276.

In this case, it is necessary to divide the solution generating portion 374 of the decryption processing apparatus 2 into a first solution generating portion 374A and a second solution generating portion 374B correspondingly to the encryption processing apparatus 1. In this case, the solution generated by the former is transmitted to the algorithm generating portion 375 and the solution generated by the latter is transmitted to the key generating portion 376 respectively.

In the case where, as in the deformed example 1, the encryption processing apparatus 1 has the algorithm generating portion 275 of the first embodiment replaced by the first algorithm generating portion 275A and the second algorithm generating portion 275B while having the key generating portion 276 of the first embodiment replaced by a first key generating portion 276A and a second key generating portion 276B respectively and the decryption processing apparatus 2 has the algorithm generating portion 375 of the first embodiment replaced by the first algorithm generating portion 375A and the second algorithm generating portion 375B while having the key generating portion 376 of the first embodiment replaced by a first key generating portion 376A and a second key generating portion 376B respectively, the solution generating portions 274 and 374 can be as follows. To be more specific, the solution generating portion 274 of the encryption processing apparatus 1 is replaced by first to fourth solution generating portions 274A to 274D so as to transmit the solution generated by the first solution generating portion 274A to the first algorithm generating portion 275A, the solution generated by the second solution generating portion 274B to the second algorithm generating portion 275B, the solution generated by the third solution generating portion 274C to the first key generating portion 276A, the solution generated by the fourth solution generating portion 274D to the second key generating portion 276B respectively while the solution generating portion 374 of the decryption processing apparatus 2 is replaced by first to fourth solution generating portions 374A to 374D so as to transmit the solution generated by the first solution generating portion 374A to the first algorithm generating portion 375A, the solution generated by the second solution generating portion 374B to the second algorithm generating portion 375B, the solution generated by the third solution generating portion 374C to the first key generating portion 376A, the solution generated by the fourth solution generating portion 374D to the second key generating portion 376B respectively.

### <Deformed Example 2>

Next, a deformed example 2 will be described.

The encryption system according to the deformed example 2 is basically the same as the above-mentioned encryption system of the first embodiment and the configurations of the encryption processing apparatus 1 and the decryption processing apparatus 2 included therein are also the same as those in the first embodiment. However, some of the functions of the encryption apparatus 27 of the encryption processing apparatus 1 and the decryption apparatus 37 of the decryption processing apparatus 2 included in the deformed example 2 are different from those included in the above-mentioned encryption system.

As described above, the configuration of the encryption apparatus 27 in the deformed example 2 is the same as the configuration thereof in the first embodiment, which is as shown in FIG. 3.

The deformed example 2 is different from the first embodiment as to the function of the condition data generating portion 277. However, the condition data generating portion 277 in the deformed example 2 generates multiple pieces of the condition data as with the condition data generating portion 277 of the first embodiment. Therefore, it is not different from the condition data generating portion 277 of the first embodiment in terms of its basic functions.

The condition data generated by the condition data generating portion 277 of the first embodiment should include the data on at least one of the condition in the case of allowing decryption of the encrypted cut data associated with the condition data and the condition in the case of prohibiting the decryption of the associated encrypted cut data. As for the condition data generated by the condition data generating portion 277 of the deformed example 2, however, at least one piece of the condition data includes the data on the condition in the case of allowing the decryption of the encrypted condition data generated by encrypting other condition data in addition to the above-mentioned data. To be more specific, the condition data generating portion 277 of the deformed example 2 has an additional function in comparison with the condition data generating portion 277 of the first embodiment.

To be more precise, the condition data generating portion 277 of the deformed example 2 generates multiple pieces of the condition data, and generates at least several pieces of them in a state of having those several pieces of the condition data associated to decrypt the encrypted condition data generated by encrypting those several pieces of the condition data in predetermined order. The condition data generating portion 277 also generates those several pieces of the condition data to include therein the data on the condition for decrypting the encrypted condition data to be decrypted following the encrypted condition data generated by encrypting a certain piece of the condition data. In this case, the condition for decrypting the encrypted condition data to be decrypted following the encrypted condition data generated by encrypting a certain piece of the condition data included in the condition data can be any condition. For instance, it may be the following (A) to (C):
(A) information for identifying the decryption processing apparatus allowed to perform the decryption of the encrypted condition data;
(B) information for identifying the user allowed to perform the decryption of the encrypted condition data; and
(C) information on a period allowing the decryption of the encrypted condition data.

As described above, the condition data generating portion 277 of the deformed example 2 generates at least several pieces out of multiple pieces of the condition data in a state of being associated to decrypt the encrypted condition data generated by encrypting those several pieces of the condition data in predetermined order. However, the above-mentioned several pieces of the condition data may be all of the multiple pieces of the condition data.

The function of the basic condition data generating portion 278 of the deformed example 2 is also different from that of the basic condition data generating portion 278 of the first embodiment.

As described above, in the deformed example 2, at lease several pieces out of the multiple pieces of the condition data are generated in the state of being associated to decrypt the encrypted condition data generated by encrypting those several pieces of the condition data in predetermined order. The basic condition data generating portion 278 of the deformed example 2 generates the basic condition data by including the data on the condition for allowing the decryption of the first piece to be decrypted out of the encrypted condition data obtained by encrypting those several pieces of the condition data. This condition conforms to the above-mentioned condition for decrypting the encrypted condition data to be decrypted following the encrypted condition data generated by encrypting a certain piece of the condition data.

The basic condition data generating portion 278 includes at least one of the conditions for allowing and prohibiting the decryption of the condition data other than the above several pieces of the condition data in the case where the above-mentioned several pieces of the condition data generated in the state of being associated to decrypt the encrypted condition data generated by encrypting those pieces of the condition data in predetermined order are not all of the multiple pieces of the condition data.

The above-mentioned condition data is also encrypted to become the encrypted condition data in the deformed example 2.

In the case of the deformed example 2, the basic condition data and the encrypted condition data are also connected as one together with the header data and the encrypted cut data by the connecting portion 280 so as to become the encrypted data.

Of the encrypted condition data in this case, those several pieces associated to be decrypted in predetermined order are arranged so that the one to be decrypted first is positioned ahead.

Next, the decryption apparatus 37 of the deformed example 2 will be described. Some of the functions of the decryption apparatus 37 of the deformed example 2 are a little different from those in the case of the first embodiment as described above. However, the differences in the functions are caused by the differences in the encrypted condition data included in the encrypted data and the data included in the basic condition data between the case of the first embodiment and the case of the deformed example 2, and so there is no essential difference.

The deformed example 2 and the first embodiment are different as to the functions of the basic condition data analyzing portion 378 and the condition data analyzing portion 377.

As in the case of the first embodiment, the basic condition data analyzing portion 378 of the deformed example 2 receives the basic condition data transmitted from the preprocessing portion 372, and analyzes the contents indicated in the basic condition data.

As described above, the basic condition data of the deformed example 2 includes the data on the condition for allowing the decryption of the first piece to be decrypted out of the several pieces of the encrypted condition data associated to perform the decryption in predetermined order. The basic condition data analyzing portion 378 reads the data and transmits it to the decryption portion 373.

There are the cases where the basic condition data of the deformed example 2 includes the encrypted condition data other than the several pieces of the encrypted condition data associated to perform the decryption in predetermined order. In this case, the basic condition data analyzing portion 378 reads from the basic condition data the condition for allowing or prohibiting the decryption of each individual piece of the encrypted condition data other than the several pieces of the encrypted condition data associated to perform the decryption in predetermined order. In the case where such data is read, the basic condition data analyzing portion 378 transmits it to the decryption portion 373 and the solution generating portion 374.

The decryption portion 373 of the deformed example 2 has the function of decrypting the encrypted cut data and the encrypted condition data received from the preprocessing portion 372 as in the case of the first embodiment.

The decryption of the former is the same as that in the case of the first embodiment. Therefore, the latter will be described.

The decryption of the encrypted condition data is basically the same as that in the case of the first embodiment. In particular, it is the same as that in the case of the first embodiment as to the encrypted condition data other than the several pieces of the encrypted condition data associated to perform the decryption in predetermined order.

The decryption is performed as follows as to the several pieces of the encrypted condition data associated to perform the decryption in predetermined order. First, the decryption is attempted as to the first piece to be decrypted out of the several pieces of the encrypted condition data associated to perform the decryption in predetermined order transmitted from the preprocessing portion 372 based on the condition for allowing the decryption of the first piece to be decrypted out the several pieces of the encrypted condition data associated to perform the decryption in predetermined order which are read from the basic condition data. In the case where the decryption portion 373 determines that the condition is satisfied for the sake of allowing the decryption of the first piece to be decrypted out of the several pieces of the encrypted condition data associated to perform the decryption in predetermined order, the encrypted condition data is decrypted and changed back to the condition data.

The condition data obtained by the decryption is transmitted to the condition data analyzing portion 377. The condition data analyzing portion 377 reads the condition for allowing the decryption of the piece of the encrypted condition data to be decrypted next out of the condition data. The data on that condition is transmitted to the decryption portion 373.

The decryption portion 373 attempts the decryption of a second piece to be decrypted out of the several pieces of the encrypted condition data associated to perform the decryption in predetermined order. If determined that the condition is satisfied for the sake of allowing the decryption of the second piece to be decrypted out of the several pieces of the encrypted condition data associated to perform the decryption in predetermined order, the decryption portion 373 decrypts the encrypted condition data to render it as the condition data.

The decryption portion 373 repeats such a process to decrypt the several pieces of the encrypted condition data associated to perform the decryption in predetermined order one after another.

When attempting to decrypt the several pieces of the encrypted condition data associated to perform the decryption in predetermined order, however, the decryption portion 373 does not decrypt the encrypted condition data if determined that the condition for allowing the decryption of the encrypted condition data is not satisfied.

The decryption of the encrypted cut data, the process performed thereafter by the connecting portion 379 and the like are the same as those in the case of the first embodiment.

### <<Second Embodiment>>

The encryption system of a second embodiment will be described.

The encryption system of the second embodiment is approximately in common with the encryption system of the first embodiment.

The encryption system of the second embodiment is different from the encryption system of the first embodiment as to the partial configurations of the encryption apparatus 27 of the encryption processing apparatus 1 and the decryption apparatus 37 of the decryption processing apparatus 2.

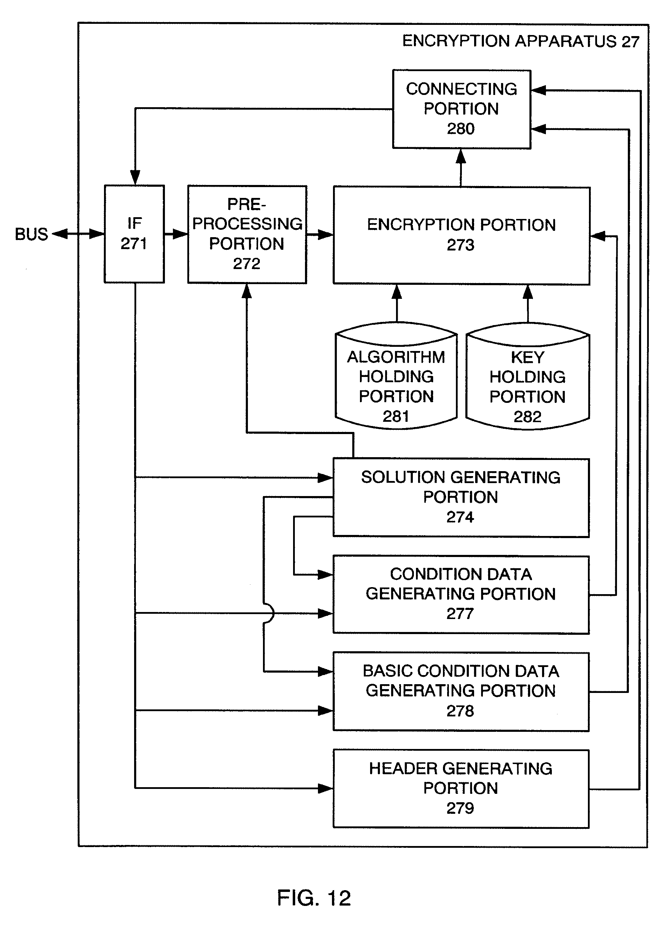

The encryption apparatus 27 of the second embodiment is configured as shown in FIG. 12.

The encryption apparatus 27 is approximately the same as that in the case of the first embodiment. However, it is different from the encryption apparatus 27 of the first embodiment in that the algorithm generating portion 275 and the key generating portion 276 are no longer provided and an algorithm holding portion 281 and a key holding portion 282 are provided instead.

The algorithm holding portion 281 holds multiple algorithms while the key holding portion 282 holds multiple keys. The algorithms are those used for the sake of encrypting the plain text cut data and the condition data in the encryption portion 273, and the keys are those used for the sake of encrypting the plain text cut data and the condition data in the encryption portion 273.

According to the first embodiment, the algorithms and keys are generated by the algorithm generating portion 275 and the key generating portion 276 based on the solutions generated by the solution generating portion 274 so that both the algorithms and keys used on encrypting the plain text cut data and the condition data can be multiple pieces. According to the second embodiment, however, multiple algorithms and multiple keys are held by the algorithm holding portion 281 and the key holding portion 282 respectively so that the multiple algorithms and multiple keys can be used when encrypting the plain text cut data and the condition data without newly generating the algorithms and solutions.

The condition data generated by the condition data generating portion 277 of the second embodiment has the contents different from those in the case of the first embodiment since the algorithm generating portion 275 and the key generating portion 276 are replaced by the algorithm holding portion 281 and the key holding portion 282.

The multiple pieces of the condition data generated in the second embodiment include the data on at least one of the condition in the case of allowing the decryption of each individual piece of the encrypted cut data and the condition in the case of prohibiting the decryption of each individual piece of the encrypted cut data in the decryption processing apparatus 2 as in the case of the first embodiment. The condition data includes the data on at least one of the condition in the case of allowing the decryption of the associated encrypted cut data and the condition in the case of prohibiting the decryption of each individual piece of the associated encrypted cut data as in the case of the first embodiment.

However, the condition data of the second embodiment does not include the information on what number generated solution the solution received from the solution generating portion 274 is (this information indicates what number solution the key and algorithm used to encrypt each individual piece of the encrypted cut data associated with the condition data are based on) which may be included in the condition data of the first embodiment. Instead, the condition data of the second embodiment may include the information indicating which of the algorithms held by the algorithm holding portion 281 is the one used on encrypting each individual piece of the plain text cut data and the information indicating which of the keys held by the key holding portion 282 is the one used on encrypting each individual piece of the plain text cut data. In the case where the algorithms and keys are given identifiers such as serial numbers for instance, this information may be the identifiers, or the algorithms themselves or the keys themselves. In this embodiment, the identifiers are included in the condition data.

Similarly, the basic condition data of the second embodiment does not include the information on what number generated solution the solution once included in the basic condition data of the first embodiment is. Instead, the basic condition data of the second embodiment may include the information indicating which of the algorithms held by the algorithm holding portion 281 is the one used on encrypting each individual piece of the condition data and the information indicating which of the keys held by the key holding portion 282 is the one used on encrypting each individual piece of the condition data. In the case where the algorithms and keys are given identifiers such as serial numbers for instance, this information may be the identifiers, or the algorithms themselves or the keys themselves. In this embodiment, the identifiers are included in the condition data.

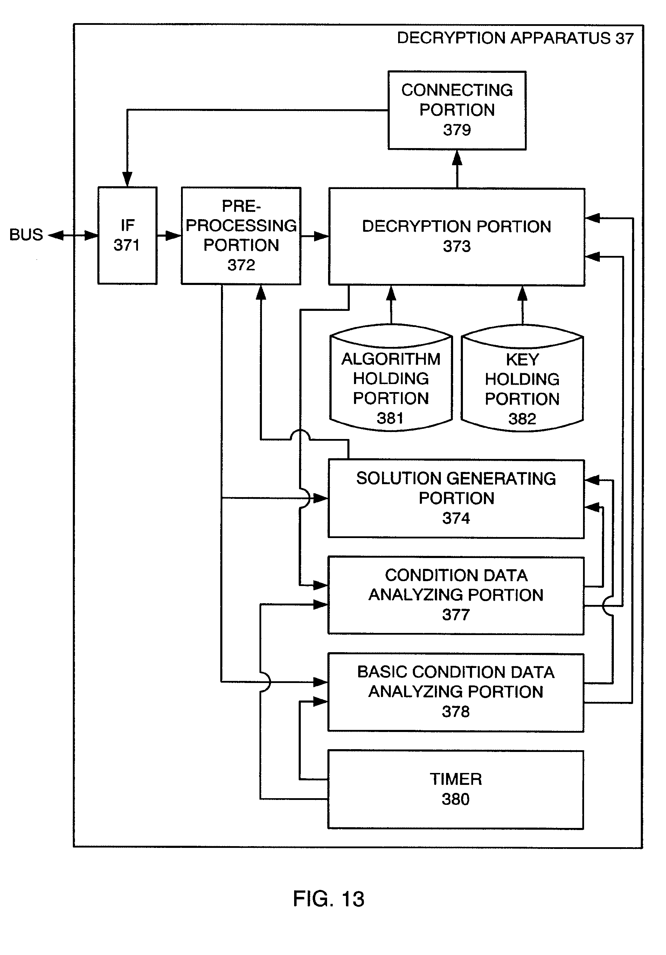

The decryption apparatus 37 of the second embodiment is configured as shown in FIG. 13.

The decryption apparatus 37 is approximately the same as that in the case of the first embodiment. However, it is different from the decryption apparatus 37 of the first embodiment in that the algorithm generating portion 375 and the key generating portion 376 are no longer provided and an algorithm holding portion 381 and a key holding portion 382 are provided instead. This change is corresponding to the above-mentioned change of the encryption apparatus 27.

The algorithm holding portion 381 and the key holding portion 382 are the same as the algorithm holding portion 281 and the key holding portion 282 in the encryption apparatus 27. The algorithm holding portion 381 holds multiple algorithms while the key holding portion 382 holds multiple keys.

The algorithms are those used for the sake of decrypting the encrypted cut data and the encrypted condition data in the decryption portion 373, and the keys are those used for the sake of decrypting the encrypted cut data and the encrypted condition data in the decryption portion 373.

According to the first embodiment, the algorithms and keys are generated by the algorithm generating portion 375 and the key generating portion 376 based on the solutions generated by the solution generating portion 374 so that both the algorithms and keys used on decrypting the encrypted cut data and the encrypted condition data can be multiple pieces. According to the second embodiment, however, multiple algorithms and multiple keys are held by the algorithm holding portion 381 and the key holding portion 382 respectively so that the multiple algorithms and multiple keys can be used when decrypting the encrypted cut data and the encrypted condition data without newly generating the algorithms and solutions.

The functions of the condition data analyzing portion 377 and the basic condition data analyzing portion 378 in the decryption apparatus 37 of the second embodiment are a little different from those in the case of the first embodiment. The differences are caused by the above-mentioned differences between the condition data and the basic condition data of the second embodiment and those of the first embodiment.

The basic condition data analyzing portion 378 of the first embodiment transmits to the decryption portion 373 the information on which encrypted condition data should be decrypted in S1303 for analyzing the contents indicated by the basic condition data, and also transmits to the solution generating portion 374 the information on what number generated solution the solution used when generating the algorithm and key used on encrypting each individual piece of the encrypted condition data to be decrypted.

The basic condition data analyzing portion 378 of the second embodiment transmits to the decryption portion 373 the information on which encrypted condition data should be decrypted as in the case of the first embodiment. However, it does not transmit to the solution generating portion 374 the information on what number generated solution the solution used when generating the algorithm and key used on encrypting each individual piece of the encrypted condition data to be decrypted is. Instead, the basic condition data analyzing portion 378 of the second embodiment transmits to the decryption portion 373 the information indicating which of the algorithms held by the algorithm holding portion 281 is the one used on encrypting each individual piece of the encrypted condition data to be decrypted (the above-mentioned identifier) and the information indicating which of the keys held by the key holding portion 282 is the one used on encrypting the encrypted condition data to be decrypted (the above-mentioned identifier).

The decryption portion 373 having received the identifier reads the algorithm associated with the identifier from the algorithm holding portion 381, and reads the key associated with the identifier from the key holding portion 382.

The algorithm and key thus read from the algorithm holding portion 381 and the key holding portion 382 are the same as the algorithm and key used when encrypting the condition data on the encryption processing apparatus 1. The decryption portion 373 decrypts the encrypted condition data by using the algorithm and key.

The algorithm holding portion 381 is not necessary in the case where the algorithm itself is the information indicating which of the algorithms held by the algorithm holding portion 281 is the one used on encrypting each individual piece of the encrypted condition data included in the basic condition data. In this case, the basic condition data analyzing portion 378 just has to transmit the algorithm itself included in the basic condition data to the decryption portion 373. The key holding portion 382 is not necessary in the case where the key itself is the information indicating which of the keys held by the key holding portion 282 is the one used on encrypting each individual piece of the encrypted condition data included in the basic condition data. In this case, the basic condition data analyzing portion 378 just has to transmit the key itself included in the basic condition data to the decryption portion 373.

The condition data analyzing portion 377 also performs the same process as this.

The condition data analyzing portion 377 of the first embodiment transmits to the decryption portion 373 the information on which encrypted cut data should be decrypted in S1307 for analyzing the contents indicated by the condition data, and also transmits to the solution generating portion 374 the information on what number generated solution the solution used when generating the algorithm and key used on encrypting each individual piece of the encrypted cut data to be decrypted.

The basic condition data analyzing portion 378 of the second embodiment transmits to the decryption portion 373 the information on which encrypted cut data should be decrypted as in the case of the first embodiment. However, it does not transmit to the solution generating portion 374 the information on what number generated solution the solution used when generating the algorithm and key used on encrypting each individual piece of the encrypted cut data to be decrypted is. Instead, the condition data analyzing portion 377 of the second embodiment transmits to the decryption portion 373 the information indicating which of the algorithms held by the algorithm holding portion 281 is the one used on encrypting each individual piece of the encrypted cut data to be decrypted (the above-mentioned identifier) and the information indicating which of the keys held by the key holding portion 282 is the one used on encrypting the encrypted cut data to be decrypted (the above-mentioned identifier).

The decryption portion 373 having received the identifier reads the algorithm associated with the identifier from the algorithm holding portion 381, and reads the key associated with the identifier from the key holding portion 382 as in the above-mentioned case so as to decrypt the encrypted cut data by using them.

As in the above-mentioned case, the algorithm holding portion 381 is not necessary in the case where the algorithm itself is the information indicating which of the algorithms held by the algorithm holding portion 281 is the one used on encrypting each individual piece of the encrypted cut data included in the condition data. Also, the key holding portion 382 is not necessary in the case where the key itself is the information indicating which of the keys held by the key holding portion 282 is the one used on encrypting each individual piece of the encrypted cut data included in the condition data.

## Claims

1. An encryption processing apparatus comprising:
cutting means for cutting subject data in plain text by a predetermined number of bits into multiple pieces of plain text cut data;
encrypting means for encrypting multiple pieces of the plain text cut data with a predetermined key and a predetermined algorithm to render it as multiple pieces of encrypted cut data;
condition data generating means for generating condition data including data on at least one of a condition in the case of allowing decryption of each individual piece of the encrypted cut data and a condition in the case of prohibiting decryption of each individual piece of the encrypted cut data;
condition data encrypting means for encrypting the condition data with a predetermined key and a predetermined algorithm to render it as encrypted condition data;
basic condition data generating means for generating basic condition data including data on at least one of a condition in the case of allowing decryption of the encrypted condition data and a condition in the case of prohibiting decryption of the encrypted condition data; and
connecting means for connecting the multiple pieces of encrypted cut data, the encrypted condition data and the basic condition data as one to render them as a series of encrypted data premised to be decrypted by a predetermined decryption processing apparatus, and wherein:
the connecting means connects the encrypted cut data, the encrypted condition data and the basic condition data as one to render them as a series of encrypted data in a manner the encrypted condition data is positioned ahead of the encrypted cut data having its decryption allowed or prohibited according to the condition included in the condition data which is a source of the encrypted condition data and also the basic condition data is positioned ahead of the encrypted condition data.

2. The encryption processing apparatus according to claim 1, wherein:
the condition data generating means generates multiple pieces of the condition data to satisfy the following conditions (1) to (3):
(1) each of multiple pieces of the condition data is associated with at least one of the pieces of the encrypted cut data and includes the data on at least one of the condition in the case of allowing the decryption of the associated encrypted cut data and the condition in the case of prohibiting the decryption of the associated encrypted cut data;
(2) as for the multiple pieces of the condition data, every piece of the encrypted cut data is associated with one of the multiple pieces of the condition data; and
(3) no one piece of the encrypted cut data is associated with multiple pieces of the condition data, and
the basic condition data generating means generates the basic condition data including the data on at least one of the condition as to which of the multiple pieces of the encrypted condition data should have its decryption allowed and the condition as to which of the multiple pieces of the encrypted condition data should have its decryption prohibited.

3. The encryption processing apparatus according to claim 1 or 2, wherein:
the condition data includes the data on at least one of the following (4) to (7):
(4) information for identifying the decryption processing apparatus allowed to perform or prohibited from performing the decryption of at least one piece of the encrypted cut data;
(5) information for identifying a user allowed to perform or prohibited from performing the decryption of at least one piece of the encrypted cut data;
(6) at least one of information on a period allowing the decryption of at least one piece of the encrypted cut data and information on a period prohibiting the decryption of at least one piece of the encrypted cut data; and
(7) information on which of the multiple pieces of the encrypted cut data should have its decryption allowed or information on which of the multiple pieces of the encrypted cut data should have its decryption prohibited.

4. The encryption processing apparatus according to claim 1, comprising:
encryption key holding means holding multiple encryption keys which are the keys used when the encrypting means encrypts the plain text cut data, and wherein:
the encrypting means uses at least two of the multiple encryption keys held by the encryption key holding means and thereby renders multiple pieces of the plain text cut data as the encrypted cut data so as to encrypt at least one of them with an encryption key different from that of the other pieces of the plain text cut data; and
the condition data generating means generates the condition data including the data on which of the encryption keys held by the encryption key holding means is used to render each individual piece of the encrypted cut data as the encrypted cut data.

5. The encryption processing apparatus according to claim 1, wherein:
the condition data generating means generates multiple pieces of the condition data;
the apparatus includes condition data encryption key holding means holding multiple condition data encryption keys which are the keys used when the condition data encrypting means encrypts the condition data;
the condition data encrypting means uses at least two of the multiple condition data encryption keys held by the condition data encryption key holding means and thereby renders multiple pieces of the condition data as the encrypted condition data so as to encrypt at least one of them with a condition data encryption key different from that of the other pieces of the condition data; and
the basic condition data generating means generates the basic condition data including the data on which of the condition data encryption keys held by the condition data encryption key holding means is used to render each individual piece of the encrypted condition data as the encrypted condition data.

6. The encryption processing apparatus according to claim 1, comprising:
encryption key generating means for generating encryption keys which are the keys used when the encrypting means encrypts the plain text cut data in predetermined timing, and wherein:
the encrypting means uses multiple encryption keys generated by the encryption key generating means and thereby renders multiple pieces of the plain text cut data as the encrypted cut data so as to encrypt at least one of them with an encryption key different from that of the other pieces of the plain text cut data; and
the condition data generating means generates the condition data including the data for identifying the encryption key used when each individual piece of the encrypted cut data is encrypted.

7. The encryption processing apparatus according to claim 6, wherein:
the encryption key generating means generates the encryption keys so that the encryption keys generated in the same order are always the same ones when generated sequentially from an initial state; and
the data for identifying the encryption key used when each individual piece of the encrypted cut data generated by the condition data generating means is encrypted indicates the order in which the encryption key is generated.

8. The encryption processing apparatus according to claim 7, comprising:
encryption key solution generating means for sequentially generating solutions which are pseudo-random numbers so that the solutions generated in the same order from the initial state are always the same ones, and wherein:
the encryption key generating means generates the encryption keys based on the solutions received from the encryption key solution generating means; and
the data for identifying the encryption key used when each individual piece of the encrypted cut data generated by the condition data generating means is encrypted indicates the solution used when the encryption key is generated.

9. The encryption processing apparatus according to claim 7, comprising:
encryption key solution generating means for sequentially generating solutions which are pseudo-random numbers so that the solutions generated in the same order from the initial state are always the same ones, and wherein:
the encryption key generating means generates the encryption keys based on the solutions received from the encryption key solution generating means; and
the data for identifying the encryption key used when each individual piece of the encrypted cut data generated by the condition data generating means is encrypted indicates the order in which the solution used when generating the encryption key is generated.

10. The encryption processing apparatus according to claim 1, wherein:
the condition data generating means generates multiple pieces of the condition data;
the apparatus includes condition data encryption key generating means for generating condition data encryption keys which are the keys used when the condition data encrypting means encrypts the condition data in predetermined timing;
the condition data encrypting means uses the multiple condition data encryption keys generated by the condition data encryption key generating means and thereby renders multiple pieces of the condition data as the encrypted condition data so as to encrypt at least one of them with a condition data encryption key different from that of the other pieces of the condition data; and
the basic condition data generating means generates the basic condition data including the data for identifying the condition data encryption keys used when each individual piece of the encrypted condition data is encrypted.

11. The encryption processing apparatus according to claim 10, wherein:
the condition data encryption key generating means generates the condition data encryption keys so that the condition data encryption keys generated in the same order are always the same ones in the case of sequentially generating the condition data encryption keys from the initial state; and
the data for identifying the condition data encryption key used when each individual piece of the encrypted condition data generated by the basic condition data generating means is encrypted indicates the order in which the condition data encryption key is generated.

12. The encryption processing apparatus according to claim 11, comprising:
condition data encryption key solution generating means for sequentially generating solutions which are pseudo-random numbers so that the solutions generated in the same order from an initial state are always the same ones, and wherein:
the condition data encryption key generating means generates the condition data encryption keys based on the solutions received from the condition data encryption key solution generating means; and
the data for identifying the condition data encryption key used when each individual piece of the encrypted condition data generated by the basic condition data generating means is encrypted indicates the solution used when the condition data encryption key is generated.

13. The encryption processing apparatus according to claim 11, comprising:
condition data encryption key solution generating means for sequentially generating solutions which are pseudo-random numbers so that the solutions generated in the same order from an initial state are always the same ones, and wherein:
the condition data encryption key generating means generates the condition data encryption keys based on the solutions received from the condition data encryption key solution generating means; and
the data for identifying the condition data encryption key used when each individual piece of the encrypted condition data generated by the basic condition data generating means is encrypted indicates the order in which the solution used when generating the condition data encryption key is generated.

14. The encryption processing apparatus according to claim 1, comprising:
encryption algorithm holding means holding multiple encryption algorithms which are algorithms used when the encrypting means encrypts the plain text cut data, and wherein:
the encrypting means uses at least two of the multiple encryption algorithms held by the encryption algorithm holding means and thereby renders multiple pieces of the plain text cut data as the encrypted cut data so as to encrypt at least one of them with an encryption algorithm different from that of the other pieces of plain text cut data; and
the condition data generating means generates the condition data including the data on which of the encryption algorithms held by the encryption algorithm holding means is used to render each individual piece of the encrypted cut data as the encrypted cut data.

15. The encryption processing apparatus according to claim 1, wherein:
the condition data generating means generates multiple pieces of the condition data;
the apparatus includes condition data encryption algorithm holding means holding multiple condition data encryption algorithms which are the algorithms used when the condition data encrypting means encrypts the condition data;
the condition data encrypting means uses at least two of the multiple condition data encryption algorithms held by the condition data encryption algorithm holding means and thereby renders multiple pieces of the condition data as the encrypted condition data so as to encrypt at least one of them with a condition data encryption algorithm different from that of the other pieces of the condition data; and
the basic condition data generating means generates the condition data including the data on which of the condition data encryption algorithms held by the condition data encryption algorithm holding means is used to render each individual piece of the encrypted condition data as the encrypted condition data.

16. The encryption processing apparatus according to claim 1, comprising:
encryption algorithm generating means for generating encryption algorithms which are the algorithms used when the encrypting means encrypts the plain text cut data in predetermined timing, and wherein:
the encrypting means uses the multiple encryption algorithms generated by the encryption algorithm generating means and thereby renders multiple pieces of the plain text cut data as the encrypted cut data so as to encrypt at least one of them with an encryption algorithm different from that of the other pieces of the plain text cut data; and
the condition data generating means generates the condition data including the data for identifying the encryption algorithm used when each individual piece of the encrypted cut data is encrypted.

17. The encryption processing apparatus according to claim 16, wherein:
the encryption algorithm generating means generates the encryption algorithms so that the encryption algorithms generated in the same order are always the same ones in the case of sequentially generating the encryption algorithms from the initial state; and
the data for identifying the encryption algorithm used when each individual piece of the encrypted cut data generated by the condition data generating means is encrypted indicates the order in which the encryption algorithm is generated.

18. The encryption processing apparatus according to claim 17, comprising:
encryption algorithm solution generating means for sequentially generating solutions which are pseudo-random numbers so that the solutions generated in the same order from the initial state are always the same ones, and wherein:
the encryption algorithm generating means generates the encryption algorithms based on the solutions received from the encryption algorithm solution generating means; and
the data for identifying the encryption algorithm used when each individual piece of the encrypted cut data generated by the condition data generating means is encrypted indicates the solution used when the encryption algorithm is generated.

19. The encryption processing apparatus according to claim 17, comprising:
encryption algorithm solution generating means for sequentially generating solutions which are pseudo-random numbers so that the solutions generated in the same order from the initial state are always the same ones, and wherein:
the encryption algorithm generating means generates the encryption algorithms based on the solutions received from the encryption algorithm solution generating means; and
the data for identifying the encryption algorithm used when each individual piece of the encrypted cut data generated by the condition data generating means is encrypted indicates the order in which the solution used when generating the encryption algorithm is generated.

20. The encryption processing apparatus according to claim 1, wherein:
the condition data generating means generates multiple pieces of the condition data;
the apparatus includes condition data encryption algorithm generating means for generating condition data encryption algorithms which are the algorithms used when the condition data encrypting means encrypts the condition data in predetermined timing;
the condition data encrypting means uses the multiple condition data encryption algorithms generated by the condition data encryption algorithm generating means and thereby renders multiple pieces of the condition data as the encrypted condition data so as to encrypt at least one of them with a condition data encryption algorithm different from that of the other pieces of the condition data; and
the basic condition data generating means generates the basic condition data including the data for identifying the condition data encryption algorithms used when each individual piece of the encrypted condition data is encrypted.

21. The encryption processing apparatus according to claim 20, wherein:
the condition data encryption algorithm generating means generates the condition data encryption algorithms so that the condition data encryption algorithms generated in the same order are always the same ones in the case of sequentially generating the condition data encryption algorithms from the initial state; and
the data for identifying the condition data encryption algorithm used when each individual piece of the encrypted condition data generated by the basic condition data generating means is encrypted indicates the order in which the condition data encryption algorithm is generated.

22. The encryption processing apparatus according to claim 21, comprising:
condition data encryption algorithm solution generating means for sequentially generating solutions which are pseudo-random numbers so that the solutions generated in the same order from the initial state are always the same ones, and wherein:
the condition data encryption algorithm generating means generates the condition data encryption algorithms based on the solutions received from the condition data encryption algorithm solution generating means; and
the data for identifying the condition data encryption algorithm used when each individual piece of the encrypted condition data generated by the basic condition data generating means is encrypted indicates the solution used when the condition data encryption algorithm is generated.

23. The encryption processing apparatus according to claim 21, comprising:
condition data encryption algorithm solution generating means for sequentially generating solutions which are pseudo-random numbers so that the solutions generated in the same order from the initial state are always the same ones, and wherein:
the condition data encryption algorithm generating means generates the condition data encryption algorithms based on the solutions received from the condition data encryption algorithm solution generating means; and
the data for identifying the condition data encryption algorithm used when each individual piece of the encrypted condition data generated by the basic condition data generating means is encrypted indicates the order in which the solution used when generating the condition data encryption algorithm is generated.

24. An encryption method implemented by an encryption processing apparatus, wherein the encryption processing apparatus implements steps of:
cutting subject data in plain text by a predetermined number of bits into multiple pieces of plain text cut data;
encrypting the multiple pieces of the plain text cut data with a predetermined key and a predetermined algorithm to render it as multiple pieces of encrypted cut data;
generating condition data including data on at least one of a condition in the case of allowing decryption of each individual piece of the encrypted cut data and a condition in the case of prohibiting decryption of each individual piece of the encrypted cut data;
encrypting the condition data with a predetermined key and a predetermined algorithm to render it as encrypted condition data;
generating basic condition data including data on at least one of a condition in the case of allowing decryption of the encrypted condition data and a condition in the case of prohibiting decryption of the encrypted condition data; and
connecting the multiple pieces of the encrypted cut data, the encrypted condition data and the basic condition data as one to render them as a series of encrypted data premised to be decrypted by a predetermined decryption processing apparatus, and wherein:
in the step of connecting the multiple pieces of encrypted cut data, the encrypted condition data and the basic condition data as one to render them as a series of encrypted data premised to be decrypted by the predetermined decryption processing apparatus,
the encryption processing apparatus connects the encrypted cut data, the encrypted condition data and the basic condition data as one to render them as a series of encrypted data in a manner the encrypted condition data is positioned ahead of the encrypted cut data having its decryption allowed or prohibited according to the condition included in the condition data which is a source of the encrypted condition data and also the basic condition data is positioned ahead of the encrypted condition data.

25. A data structure of encrypted data connecting the following as one to render them as a series and premised to be decrypted by a predetermined decryption processing apparatus:
multiple pieces of encrypted cut data obtained by encrypting multiple pieces of plain text cut data obtained by cutting subject data in plain text by a predetermined number of bits with a predetermined key and a predetermined algorithm;
encrypted condition data obtained by encrypting condition data including data on at least one of a condition in the case of allowing decryption of each individual piece of the encrypted cut data and a condition in the case of prohibiting decryption of each individual piece of the encrypted cut data with a predetermined key and a predetermined algorithm; and
basic condition data including data on at least one of a condition in the case of allowing decryption of the encrypted condition data and a condition in the case of prohibiting decryption of the encrypted condition data, and wherein:
as for the encrypted cut data, the encrypted condition data and the basic condition data, the encrypted condition data is positioned ahead of the encrypted cut data having its decryption allowed or prohibited according to the condition included in the condition data which is a source of the encrypted condition data and the basic condition data is positioned ahead of the encrypted condition data.

26. The data structure of encrypted data according to claim 25, wherein there are multiple pieces of the condition data to satisfy the following conditions (1) to (3):
(1) each individual piece of the condition data is associated with at least one of the pieces of the encrypted cut data and includes the data on at least one of the condition in the case of allowing the decryption of the associated encrypted cut data or the condition in the case of prohibiting the decryption of the associated encrypted cut data;
(2) as for the multiple pieces of the condition data, every piece of the encrypted cut data is associated with one of the multiple pieces of the condition data; and
(3) no one piece of the encrypted cut data is associated with multiple pieces of the condition data, and
the basic condition data includes the data on at least one of the condition of which piece of the encrypted condition data should have its decryption allowed and the condition of which piece of the encrypted condition data should have its decryption prohibited.

27. The data structure of encrypted data according to claim 25 or 26, wherein the condition data includes the data on at least one of the following (4) to (7):
(4) information for identifying the decryption processing apparatus allowed to perform or prohibited from performing the decryption of at least one piece of the encrypted cut data;
(5) information for identifying a user allowed to perform or prohibited from performing the decryption of at least one piece of the encrypted cut data;
(6) at least one of information on a period allowing the decryption of at least one piece of the encrypted cut data and information on a period prohibiting the decryption of at least one piece of the encrypted cut data; and
(7) information on which of the multiple pieces of the encrypted cut data should have its decryption allowed or information on which of the multiple pieces of the encrypted cut data should have its decryption prohibited.

28. The data structure of encrypted data according to claim 25, wherein:
each individual piece of the encrypted cut data is encrypted by using one of multiple encryption keys so as to encrypt at least one of multiple pieces of the plain text cut data with an encryption key different from that of the other pieces of the plain text cut data; and
the condition data includes the data on which of the multiple encryption keys is used to render each individual piece of the encrypted cut data as the encrypted cut data.

29. The data structure of encrypted data according to claim 25, wherein:
there are multiple pieces of the condition data;
each individual piece of the encrypted condition data is encrypted by using one of multiple condition data encryption keys so as to encrypt at least one of multiple pieces of the condition data with a condition data encryption key different from that of the other pieces of the condition data; and
the basic condition data includes the data on which of the multiple condition data encryption keys is used to render each individual piece of the encrypted condition data as the encrypted condition data.

30. The data structure of encrypted data according to claim 25, wherein:
the encrypted data is generated by an encryption processing apparatus comprising encryption key generating means for generating multiple encryption keys in predetermined timing;
each individual piece of the encrypted cut data is encrypted by using one of the multiple encryption keys generated by the encryption key generating means so as to encrypt at least one of the multiple pieces of the plain text cut data with an encryption key different from that of the other pieces of the plain text cut data; and
the condition data includes the data for identifying the encryption key used when each individual piece of the encrypted cut data is encrypted.

31. The data structure of encrypted data according to claim 30, wherein:
the encryption key generating means generates the encryption keys so that the encryption keys generated in the same order are always the same ones in the case of generating the encryption keys sequentially from an initial state; and
the data for identifying the encryption key used when each individual piece of the encrypted cut data included in the condition data is encrypted indicates the order in which the encryption key is generated.

32. The data structure of encrypted data according to claim 31, wherein:
the encrypted data is generated by an encryption processing apparatus comprising encryption key solution generating means for sequentially generating solutions which are pseudo-random numbers so that the solutions generated in the same order from the initial state are always the same ones;
the encryption key generating means generates the encryption keys based on the solutions received from the encryption key solution generating means; and
the data for identifying the encryption key used when each individual piece of the encrypted cut data included in the condition data is encrypted indicates the solution used when the encryption key is generated.

33. The data structure of encrypted data according to claim 31, wherein:
the encrypted data is generated by an encryption processing apparatus comprising encryption key solution generating means for sequentially generating solutions which are pseudo-random numbers so that the solutions generated in the same order from the initial state are always the same ones;
the encryption key generating means generates the encryption keys based on the solutions received from the encryption key solution generating means; and
the data for identifying the encryption key used when each individual piece of the encrypted cut data included in the condition data is encrypted indicates the order in which the solution used when generating the encryption key is generated.

34. The data structure of encrypted data according to claim 25, wherein:
there are multiple pieces of the condition data;
the encrypted condition data is generated by an encryption processing apparatus comprising condition data encryption key generating means for generating multiple condition data encryption keys in predetermined timing;
each individual piece of the encrypted condition data is encrypted by using one of the multiple condition data encryption keys generated by the condition data encryption key generating means so as to encrypt at least one of the multiple pieces of the condition data with a condition data encryption key different from that of the other pieces of the condition data; and
the basic condition data includes the data for identifying the condition data encryption key used when each individual piece of the encrypted condition data is encrypted.

35. The data structure of encrypted data according to claim 34, wherein:
the condition data encryption key generating means generates the condition data encryption keys so that the condition data encryption keys generated in the same order are always the same ones in the case of sequentially generating the condition data encryption keys from the initial state; and
the data for identifying the condition data encryption key used when each individual piece of the encrypted condition data included in the basic condition data is encrypted indicates the order in which the condition data encryption key is generated.

36. The data structure of encrypted data according to claim 35, wherein:
the encrypted data is generated by an encryption processing apparatus comprising condition data encryption key solution generating means for sequentially generating solutions which are pseudo-random numbers so that the solutions generated in the same order from the initial state are always the same ones, and wherein:
the condition data encryption key generating means generates the condition data encryption keys based on the solutions received from the condition data encryption key solution generating means; and
the data for identifying the condition data encryption key used when each individual piece of the encrypted condition data included in the basic condition data is encrypted indicates the solution used when the condition data encryption key is generated.

37. The data structure of encrypted data according to claim 36, wherein:
the encrypted data is generated by an encryption processing apparatus comprising condition data encryption key solution generating means for sequentially generating solutions which are pseudo-random numbers so that the solutions generated in the same order from the initial state are always the same ones, and wherein:
the condition data encryption key generating means generates the condition data encryption keys based on the solutions received from the condition data encryption key solution generating means; and
the data for identifying the condition data encryption key used when each individual piece of the encrypted condition data included in the basic condition data is encrypted indicates the order in which the solution used when generating the condition data encryption key is generated.

38. The data structure of encrypted data according to claim 25, wherein:
each individual piece of the encrypted cut data is encrypted by using one of multiple encryption algorithms so as to encrypt at least one of multiple pieces of the plain text cut data with an encryption algorithm different from that of the other pieces of the plain text cut data; and
the condition data includes the data on which of the multiple encryption algorithms is used to render each individual piece of the encrypted cut data as the encrypted cut data.

39. The data structure of encrypted data according to claim 25, wherein:
there are multiple pieces of the condition data;
each individual piece of the encrypted condition data is encrypted by using one of multiple condition data encryption algorithms so as to encrypt at least one of multiple pieces of the condition data with a condition data encryption algorithm different from that of the other pieces of the condition data; and
the basic condition data includes the data on which of the multiple condition data encryption algorithms is used to render each individual piece of the encrypted condition data as the encrypted condition data.

40. The data structure of encrypted data according to claim 25, wherein:
the encrypted data is generated by an encryption processing apparatus comprising encryption algorithm generating means for generating multiple encryption algorithms in predetermined timing;
each individual piece of the encrypted cut data is encrypted by using one of the multiple encryption algorithms generated by the encryption algorithm generating means so as to encrypt at least one of the multiple pieces of the plain text cut data with an encryption algorithm different from that of the other pieces of the plain text cut data; and
the condition data includes the data for identifying the encryption algorithm used when each individual piece of the encrypted cut data is encrypted.

41. The data structure of encrypted data according to claim 40, wherein:
the encryption algorithm generating means generates the encryption algorithms so that the encryption algorithms generated in the same order are always the same ones in the case of generating the encryption algorithms sequentially from the initial state; and
the data for identifying the encryption algorithm used when each individual piece of the encrypted cut data included in the condition data is encrypted indicates the order in which the encryption algorithm is generated.

42. The data structure of encrypted data according to claim 41, wherein:
the encrypted data is generated by an encryption processing apparatus comprising encryption algorithm solution generating means for sequentially generating solutions which are pseudo-random numbers so that the solutions generated in the same order from the initial state are always the same ones;
the encryption algorithm generating means generates the encryption algorithms based on the solutions received from the encryption algorithm solution generating means; and
the data for identifying the encryption algorithm used when each individual piece of the encrypted cut data included in the condition data is encrypted indicates the solution used when the encryption algorithm is generated.

43. The data structure of encrypted data according to claim 41, wherein:
the encrypted data is generated by an encryption processing apparatus comprising encryption algorithm solution generating means for sequentially generating solutions which are pseudo-random numbers so that the solutions generated in the same order from the initial state are always the same ones;
the encryption algorithm generating means generates the encryption algorithms based on the solutions received from the encryption algorithm solution generating means; and
the data for identifying the encryption algorithm used when each individual piece of the encrypted cut data included in the condition data is encrypted indicates the order in which the solution used when generating the encryption algorithm is generated.

44. The data structure of encrypted data according to claim 25, wherein:
there are multiple pieces of the condition data;
the encrypted condition data is generated by an encryption processing apparatus comprising condition data encryption algorithm generating means for generating multiple condition data encryption algorithms in predetermined timing;
each individual piece of the encrypted condition data is encrypted by using one of the multiple condition data encryption algorithms generated by the condition data encryption algorithm generating means so as to encrypt at least one of the multiple pieces of the condition data with a condition data encryption algorithm different from that of the other pieces of the condition data; and
the basic condition data includes the data for identifying the condition data encryption algorithm used when each individual piece of the encrypted condition data is encrypted.

45. The data structure of encrypted data according to claim 44, wherein:
the condition data encryption algorithm generating means generates the condition data encryption algorithms so that the condition data encryption algorithms generated in the same order are always the same ones in the case of sequentially generating the condition data encryption algorithms from the initial state; and
the data for identifying the condition data encryption algorithm used when each individual piece of the encrypted condition data included in the basic condition data is encrypted indicates the order in which the condition data encryption algorithm is generated.

46. The data structure of encrypted data according to claim 45, wherein:
the encrypted data is generated by an encryption processing apparatus comprising condition data encryption algorithm solution generating means for sequentially generating solutions which are pseudo-random numbers so that the solutions generated in the same order from the initial state are always the same ones, and wherein:
the condition data encryption algorithm generating means generates the condition data encryption algorithms based on the solutions received from the condition data encryption algorithm solution generating means; and
the data for identifying the condition data encryption algorithm used when each individual piece of the encrypted condition data included in the basic condition data is encrypted indicates the solution used when the condition data encryption algorithm is generated.

47. The data structure of encrypted data according to claim 45, wherein:
the encrypted data is generated by an encryption processing apparatus comprising condition data encryption algorithm solution generating means for sequentially generating solutions which are pseudo-random numbers so that the solutions generated in the same order from the initial state are always the same ones;
the condition data encryption algorithm generating means generates the condition data encryption algorithms based on the solutions received from the condition data encryption algorithm solution generating means; and
the data for identifying the condition data encryption algorithm used when each individual piece of the encrypted condition data included in the basic condition data is encrypted indicates the order in which the solution used when generating the condition data encryption algorithm is generated.

48. A decryption processing apparatus for decrypting the encrypted data according to claim 25, comprising:
basic condition data reading means for reading basic condition data from the encrypted data;
encrypted condition data reading means for reading the encrypted condition data from the encrypted data;
encrypted cut data reading means for reading the encrypted cut data from the encrypted data;
encrypted condition data decrypting means for decrypting the encrypted condition data to render it as the condition data if determined that the encrypted condition data read by the encrypted condition data reading means matches with a condition in the case of allowing decryption of the encrypted condition data indicated in the basic condition data read by the basic condition data reading means or if determined that the encrypted condition data does not match with a condition in the case of prohibiting the decryption of the encrypted condition data;
decrypting means for decrypting each individual piece of the encrypted cut data read by the encrypted cut data reading means to render it as the plain text cut data only if determined that the encrypted cut data indicated in the condition data decrypted by the encrypted condition data decrypting means matches with a condition in the case of allowing decryption or if determined that the encrypted cut data does not match with a condition in the case of prohibiting the decryption; and
connecting means for connecting the plain text cut data decrypted by the decrypting means as one to render it as the subject data.

49. A decryption processing apparatus for decrypting the encrypted data according to claim 26, comprising:
basic condition data reading means for reading the basic condition data from the encrypted data;
encrypted condition data reading means for reading the encrypted condition data from the encrypted data;
encrypted cut data reading means for reading the encrypted cut data from the encrypted data;
encrypted condition data decrypting means for decrypting the encrypted condition data to render it as the condition data if determined that the encrypted condition data read by the encrypted condition data reading means matches with a condition in the case of allowing decryption of the encrypted condition data indicated in the basic condition data read by the basic condition data reading means or if determined that the encrypted condition data does not match with a condition in the case of prohibiting the decryption of the encrypted condition data;
decrypting means for decrypting the encrypted cut data to render it as the plain text cut data only if determined that each individual piece of the encrypted cut data read by the encrypted cut data reading means matches with a condition in the case of allowing decryption of the encrypted cut data indicated in the condition data decrypted by the encrypted condition data decrypting means or if determined that the encrypted cut data does not match with a condition in the case of prohibiting the decryption of the encrypted cut data; and
connecting means for connecting the plain text cut data decrypted by the decrypting means as one to render it as the subject data, and wherein:
the encrypted condition data decrypting means decrypts the encrypted condition data to render it as the condition data only if determined that each individual piece of the encrypted condition data read by the encrypted condition data reading means matches with a condition as to which of multiple pieces of the encrypted condition data should have its decryption allowed or if it does not match with a condition as to which of the multiple pieces of the encrypted condition data should have its decryption prohibited; and
the decrypting means decrypts the encrypted cut data to render it as the plain text cut data based only on the decrypted condition data.

50. A method implemented by the decryption processing apparatus for decrypting encrypted data according to claim 25, comprising the steps for the decryption processing apparatus of:
reading the basic condition data from the encrypted data;
reading the encrypted condition data from the encrypted data;
reading the encrypted cut data from the encrypted data;
decrypting the encrypted condition data to render it as the condition data if determined that the read encrypted condition data matches with a condition in the case of allowing decryption of the encrypted condition data indicated in the read basic condition data or if determined that the encrypted condition data does not match with a condition in the case of prohibiting the decryption thereof;
decrypting each individual piece of the read encrypted cut data to render it as the plain text cut data only if determined that the encrypted cut data indicated in the decrypted condition data matches with a condition in the case of allowing the decryption thereof or if determined that the encrypted cut data does not match with a condition in the case of prohibiting the decryption thereof; and
connecting the plain text cut data decrypted by the decrypting means as one to render it as the subject data.

51. A decryption method implemented by the decryption processing apparatus for decrypting encrypted data according to claim 26, the method comprising the steps of:
reading the basic condition data from the encrypted data;
reading the encrypted condition data from the encrypted data;
reading the encrypted cut data from the encrypted data;
decrypting the encrypted condition data to render it as the condition data if determined that the read encrypted condition data matches with a condition in the case of allowing decryption of the encrypted condition data indicated in the basic condition data read by the basic condition data reading means or if determined that the encrypted condition data does not match with a condition in the case of prohibiting the decryption thereof;
decrypting the encrypted cut data to render it as the plain text cut data only if determined that each individual piece of the encrypted cut data read by the encrypted cut data reading means matches with a condition in the case of allowing the decryption of the encrypted cut data indicated in the decrypted condition data or if determined that the encrypted cut data does not match with a condition in the case of prohibiting the decryption thereof; and
connecting the decrypted plain text cut data as one to render it as the subject data, and wherein:
in the step of decrypting the encrypted condition data to render it as the condition data, the encrypted condition data is decrypted to render it as the condition data only if determined that each individual piece of the read encrypted condition data matches with a condition as to which of multiple pieces of the encrypted condition data should have its decryption allowed or if it does not match with a condition as to which of the multiple pieces of the encrypted condition data should have its decryption prohibited; and
in the step of decrypting the encrypted cut data to render it as the plain text cut data, the encrypted cut data is decrypted to render it as the plain text cut data based only on the decrypted condition data.

52. The encryption processing apparatus according to claim 1, wherein:
the condition data generating means generates multiple pieces of the condition data and includes data on a condition in the case of allowing decryption of the encrypted condition data generated by encrypting the other pieces of the condition data in at least one piece of the condition data.

53. The encryption processing apparatus according to claim 1, wherein:
the condition data generating means generates multiple pieces of the condition data and has at least several pieces of the multiple pieces of the condition data associated to decrypt the encrypted condition data generated by encrypting those several pieces of the condition data in predetermined order; and
those several pieces of the condition data are generated to include data on a condition for decrypting the encrypted condition data to be decrypted following the encrypted condition data generated by encrypting the condition data.

54. The encryption processing apparatus according to claim 53, wherein:
the basic condition data generating means includes a condition in the case of allowing decryption of a piece to be decrypted first out of the pieces of the encrypted condition data generated by encrypting several pieces of the condition data.

55. The data structure of encrypted data according to claim 25, wherein:
there are multiple pieces of the condition data; and
at least one piece of the condition data includes data on a condition in the case of allowing decryption of the encrypted condition data generated by encrypting the other pieces of the condition data.

56. The data structure of encrypted data according to claim 25, wherein:
there are multiple pieces of the condition data;
at least several pieces of the multiple pieces of the condition data are associated to decrypt the encrypted condition data generated by encrypting those several pieces of the condition data in predetermined order; and
each of those several pieces of the condition data includes data on a condition for decrypting a piece of the encrypted condition data to be decrypted following a piece of the encrypted condition data generated by encrypting the condition data.

57. The data structure of encrypted data according to claim 56, wherein:
the basic condition data includes a condition in the case of allowing decryption of a piece to be decrypted first out of the pieces of the encrypted condition data generated by encrypting the several pieces of the condition data.
